# EUROPEAN PATENT SPECIFICATION

(11) **EP 1 684 536 B1**
(45) Date of publication and mention of the grant of the patent: **01.04.2015**
(21) Application number: 05001032.1
(22) Date of filing: 19.01.2005
(51) Int. Cl.: H04L 12/70, H04W 4/24

(54) **Control policy over uplink resources in a wireless network**
Steuerungsrichtlinien von Aufwärtsressourcen in einem drahtlosen Netwerk
Politique de contrôle des resources montantes dans un réseau sans fil

(43) Date of publication of application: 26.07.2006
(73) Proprietor: Telefonaktiebolaget LM Ericsson (publ), 164 83 Stockholm (SE)
(72) Inventor: Boman, Krister, 431 44 Mölndal (SE); Rydnell, Gunnar, 421 59 Västra Frölunda (SE); Lövsén, Lars, 413 14 Göteborg (SE)
(74) Representative: Vejgaard, Christian

(56) References cited:
- TSG CORE NETWORK: "End to End Quality of service (QOS) signalling flows (TS 29.208 v6.2.1) 6)" 3GPP, [Online] 13 January 2005 (2005-01-13), XP002323477 Retrieved from the Internet: URL:http://www.3gpp.org/ftp/Specs/archive/ 29_series/29.208/> [retrieved on 2005-04-06]
- TSG CORE NETWORK: "Policy Control over Go Interface (TS 29.207 v 6.2.0)" 3GPP, [Online] 7 January 2005 (2005-01-07), XP002323478 Retrieved from the Internet: URL:http://www.3gpp.org/ftp/Specs/archive/ 29_series/29.207/> [retrieved on 2005-04-06]
- TSG CORE NETWORK: "Policy control over Gq interface (TS 29.209 v6.1.0)" 3GPP, [Online] 7 January 2005 (2005-01-07), XP002323479 Retrieved from the Internet: URL:http://www.3gpp.org/ftp/Specs/archive/ 29_series/29.209/> [retrieved on 2005-04-06]

## Description

### FIELD OF THE INVENTION

The present invention relates to a method for providing uplink transmission resource usage control in a communication system supporting communication of packet data for a mobile user station accessing/requesting access to services provided by an application function of an external packet data network, comprising; establishing a user session relating to a service, to which access is requested by a mobile user station, using an application signalling protocol including provisioning of a service description listing which QoS and other transmission characteristics are required for said requested service, from an application function handling mobility management and call control of mobile user stations requesting/accessing a service, to a charging and/or policy handling node.

The invention also relates to a mobile user station with the features of the first part of claim 3, a charging and/or a policy handling node with the features of the first part of claim 5, a packet data support node with the features of the first part of claim 10, and to a system having the features of the first part of claim 17.

### STATE OF THE ART

Multimedia services or real times services provided via external data networks, such as streaming video and voice over IP (VoIP) require QoS (Quality of Server) control. Policy control is performed in a network in order to provide a guaranteed QoS to the user. Policy control includes methods for example relating to admission control, gating of flows, QoS negotiation, DiffServ, mapping of IP flows to bearer resources etc. 3GPP (3^{rd} Generation Partnership Project) has specified SBLP (Service Base Local Policy) in order to perform policy control in GPRS (General Packet Radio Service). Policy control is then carried out in a packet data support node, Gateway GPRS Support Node (GGSN) using policy rules dynamically installed in the GGSN from a PDF node over an interface denoted Go. Information for creating such policy rules may be obtained from an Application Function AF or subscriber information or other operator controlled information. It is important for an operator to be able to apply charging depending on which resources that actually are used, i.e. some resources are cheaper whereas others are more expensive and it is important to be able to charge in dependence thereof, and it is also important that not unnecessarily expensive resources are used at the same time as the required or requested QoS can be upheld, or provided to the largest possible extent. In order to implement SBLP, 3GPP specifies that an AF shall request a token from the PDF for the purpose of identifying a PDP context, set up with a specific service that the AF provides or controls. At establishment of a service, the mobile user station, or the User Equipment UE, gets the token and information on suitable QoS profile for the PDP context from the Application Function AF for example via SIP (Session based Initiation Protocol) signalling. In order for SBLP function, the UE has to support the handling of the token. The AF informs the PDF that the QoS profile may be granted for a PDP context that reports the same token value.

According to the 3GPP proposal, at PDP context establishment (the Secondary PDP Context Activation procedure), the UE shall provide the token along with all other PDP parameters. For PDP contexts, where a token is included in the activation request, the GGSN should interrogate the PDF for permission to establish the PDP context. The PDF provides, along with the permission to establish the PDP context, a filter or a pattern that takes precedence over all traffic flow templates (TFTs) that have been provided by the UE. In order for this functionality to be realized, also the GGSN has to support token handling and to handle Go-specific traffic mapping (i.e. overriding TFTs).

The token has to be passed all around the signalling chain from PDF to AF to UE to SGSN to GGSN to PDF, e.g. as described in TSG Core Network: "Policy Control over Go Interface (TS 29.207 v 6.2.0)" 3GPP, [Online] 7 January 2005 (2005-01-07), XP002323478. However, so far there is no mobile user station or UE available on the market that supports the handling of tokens. Even if a terminal would be provided that supports such a functionality, it will take a long time before there are a sufficient number of terminals on the market that supports such a feature.

This means that today the network has no control whatsoever over which transmission resources that are used by a UE for uplink communication during a service session. I.e. the network has no knowledge about the way a UE maps uplink traffic to PDP contexts. Today an UE sends a TFT to for example a GGSN indicating how a packet is to be mapped on a context in GGSN. Thus GGSN provides for a service-transmission resource mapping functionality on the downlink which means that a control functionality for sessions and used PDP contexts is provided for the downlink. However, as referred to above, for the uplink communication GGSN does not know which PDP contexts that actually are used, and hence it can not be provided for any mapping to QoS etc. and as a consequence thereof for example charging can not be performed as it would be desired.

The use of GPRS Policy control over the Go interface has the drawback of requiring the PDF, AF, UE, SGSN and GGSN to deal with a token used for correlating the GPRS service with the application level at the PDF. Token handling may, as referred to above, possibly not even be implemented by mobile manufactures or even in many AFs providing services on Internet today.

Hence the network has to rely on the proper behaviour of the UE for mapping uplink traffic to the appropriate PDP context. This may however involve mappings that are implemented locally in UE and the outcome of the mapping therefore may depend on the UE implementation. A UE deviating from the expected behaviour may cause degradation of the perceived quality of the service provided as well as it may result in a waste of scarce transmission resources, for example radio bandwidth. Some PS (Packet Switched) services in PLMNs, (Public Land Mobile Network), such as for example IMS services, require a minimum QoS from the transmission channel used. In a GPRS network the UE may establish transmission channels (PDP contexts) from the UE to the GGSN where the transmission characteristics differ between the transmission channels.

For downlink traffic, the network can, as referred to above, keep control over the way the transmission channels are used for providing different kinds of services. On the uplink, even for properly implemented UEs, it is on the other hand not possible to obtain any information about what transmission resources that will be used for the uplink traffic.

For SBLP, the application function originates the information, but it is processed in separate processing chains, namely from application to PDF to GGSN and from application to UE respectively. The UE and the application functioning derives flow identifiers by local means and the outcome has to be identical for SBLP in order to work properly and there is no protection whatsoever in the network against erroneous uplink traffic mapping at the UE.

Hence, today there is no way of obtaining knowledge in the network relating to the usage of uplink transmission resources for an accessed service, and also no way of controlling the uplink transmission resource usage.

### SUMMARY OF THE INVENTION

What is needed is therefore an arrangement in a communications system supporting communication of packet data through which it is possible to get information about, and even more particularly to control the usage of transmission resources on the uplink. Particularly an arrangement is needed through which it is possible to perform policy control in for example GPRS, UMTS or other systems. Particularly an arrangement is needed through which it is possible to obtain knowledge about used transmission resources on the uplink as well as on the downlink (the present invention mainly is concerned with the uplink, since also in state of the art systems it is possible to keep control over the downlink transmission resource usage, i.e. for a session for example GGSN knows which transmission resources, particularly PDP contexts, that are used during a session.

Particularly an arrangement is needed through which the usage of transmission resources can be optimized and through which conservation of bandwidth can be provided for. Further yet an arrangement is needed that enables for operator control as far as transmission resource usage is concerned and through which operator desired policies can be enforced.

Still further an arrangement is needed which is reliable and which ensures, or is capable of ensuring, a minimum transmission quality for a certain accessed service, i.e. end user service perception. Still further an arrangement is needed through which charging can be appropriately implemented relating to actual usage of resources. Particularly an arrangement is needed which does not require the use of any tokens or similar in order to provide for uplink transmission resource usage control. Particularly an arrangement is needed which enables a migration towards networks-centric control of UE mapping of payload to certain transmission resources, e.g. PDP contexts.

Particularly an arrangement is needed which is easy to implement and to install and to apply. Then further an arrangement is needed which is flexible and operator as well as end user friendly.

Therefore a charging and/or a policy handling node is also needed which is arranged to communicate with an application function and a packet data support node which as it is in providing one or more of the objects referred to above. Still further a packet data support node in communication with a charging and/or a policy handling node a mobile user stations is needed through which one or more of the above mentioned objects can be achieved. A mobile user station adapted such as to allow for a fulfilling of one or more of the objects referred to above is therefore also needed. Still further a method is needed for providing transmission resource usage control through which one or more of the above mentioned objects can be achieved.

A charging and/or a policy handling node can be a Charging Rules Function (CRF) as defined in the 3GPP Specification TS 23.125 Rel 6. A charging and/or a policy handling node can also be a merged CRF and PDF, commonly referred to as a Policy and Charging Control Node (PCCN), in Rel 7 of the 3GPP Specification.

Therefore a method as initially referred to is provided which comprises the characterizing features of claim 1.

A mobile user station as initially referred to is also provided which has the characterizing features of claim 3.

A charging and/or a policy handling node as initially referred to is therefore also provided having the characterizing features of claim 5.

Further a packet data support node as initially referred to is provided which comprises the characterizing features of claim 10.

Still further a system as initially referred to is provided which comprises the characterizing features as disclosed in claim 17.

### BRIEF DESCRIPTION OF THE DRAWINGS

The invention will in the following be further described, in a non-limiting manner, and with reference to the accompanying drawings in which:
- Fig. 1: is a schematical block diagram illustrating the arrangement of nodes according to the present invention,
- Fig. 2: is a block diagram illustrating user equipment (UE), a packet data node (GGSN), a charging and/or policy handling node (CRF) and an application function (AF) and their inter-working according to the invention,
- Fig. 3: schematically illustrates, in a block diagram, uplink traffic mapping in the user plane according to the invention,
- Fig. 4: schematically illustrates an embodiment in which an UE violates a declared mapping and wherein GGSN discards a non-conformed packet,
- Fig. 5: is a sequence diagram illustrating the establishment of uplink traffic mapping according to one embodiment of the present invention,
- Fig. 6: is a sequence diagram describing an embodiment according to which an established uplink mapping can be modified,
- Fig. 7: is a sequence diagram illustrating, according to one embodiment of the invention, how an established uplink mapping can be changed through initiation by the network,
- Fig. 8: is a flow diagram describing the procedural steps in a mobile user station according to one implementation of the invention, and
- Fig. 9: is a schematical flow diagram illustrating the procedure in the charging and/or policy handling node for the embodiment of Fig. 8.

### DETAILED DESCRIPTION OF THE INVENTION

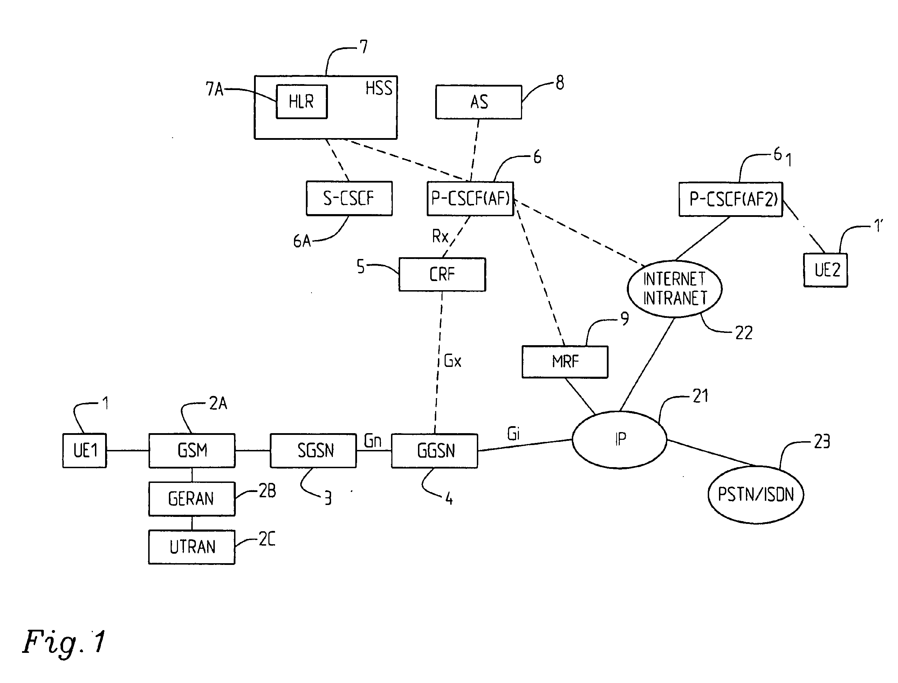

Fig. 1 is a schematical block diagram of an IMS architecture including the inventive arrangement. Full lines between nodes or functions in the figure indicate physical channels whereas dashed lines indicate logical channels. It should be clear that the inventive concept is not limited to IMS implementations, this is merely given as one particular example. Other examples are HTTP services. In the illustrated embodiment a mobile user station, UE1 1 (User Equipment) communicates with SGSN 3 (Serving GPRS Support Node) over GSM 2A or GERAN 2B (GSM Radio Access Network) or UTRAN 2C (UMTS Radio Access Network). In a conventional manner SGSN 3 communicates with GGSN 4 (Gateway GPRS Support Node) over the Gn interface. Charging Rules Function 5 is a node controlling GGSN behaviour for example for charging purposes etc. Particularly the Gx interface is used for logical communication between GGSN 4 and CRF 5. A logical channel over the Rx interface is provided between CRF 5 and application function AF 6, which in the particular embodiment is a proxy call session control function which is a network element or an application function which is specific for IMS and which provides for session management services, for example telephony call control etc.

In the figure also a serving call session control function 6A is illustrated, which however is not indispensable for the functioning of the present invention.

AF 6 communicates with HSS 7 comprising an HLR 7A and an application server AS 8, which however also not is indispensable for the functioning of the present invention. Not illustrated in the figure is the SIP (Session-based Initiation Protocol) signalling between UE 1 and AF 6 through which a service description is provided to UE 1 as will be more thoroughly described below. Services provided by external data networks can be accessed and this can be provided for in many different ways and therefore only one example is illustrated herein and in which GGSN, over the Gi interface communicates with an IP network, for example an operator controlled IP network 21 which here communicates with MRF 9 (Media Resource Function) and with Internet/Intranet 22. It may also (of course not necessary for the functioning of the inventive concept but which constitutes an option), be in communication for example over a circuit switched gateway (not shown) with a PSTN/ISDN 23 (Public Switched Telecommunication Network/Integrated Services Digital Network). Another user equipment UE 2 1' may communicate via P-CSCF2 6₁ with Internet.

Examples of IMS services are Voice over IP (VoIP, SIP) as specified in IETF RFC (Request For Comments) 3261. The service description provided via AI 6 to UE 1 may be provided using the SDP (Session Description Protocol) as described IETF RFC 2327.

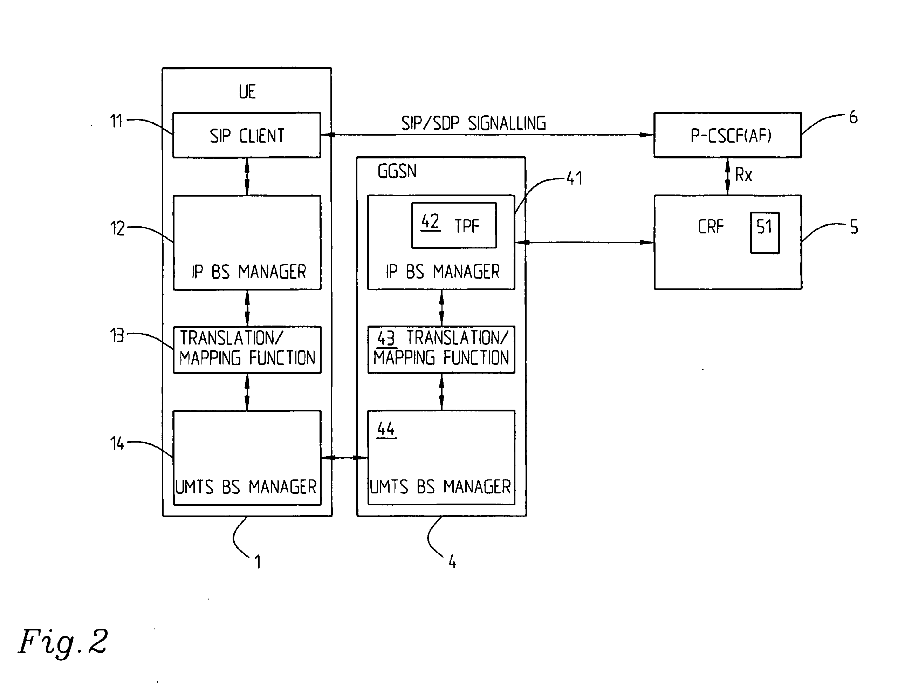

Fig. 2 is a schematical block diagram illustrating the nodes or functions involved in transmission resource establishment or mapping according to the inventive concept for uplink traffic. Particularly Fig. 2 shows user equipment UE 1 comprising an SIP client 11 and IP BS manager 12 (Internet Protocol Bearer Service Manager) which uses a standard IP mechanism to manage the IP Bearer Service. UE 1 further comprises a UMTS Bearer Service Manager, UMTS BS Manager 14 handling resource reservation requests, such as PDP Context Activation, from the UE. UE 1 further comprises first extended mapping means, here denoted Translation/Mapping Function 13 which provides an interworking between the mechanisms and parameters used within the UMTS Bearer Service and the corresponding ones used within the IP Bearer Service and it is responsible for (indicating), mapping uplink resources, particularly PDP contexts, to be used for a particular service session using information provided via SIP/SDP signalling between the UE 1 and the application function 6 which here is a proxy call session control function as discussed above.

The packet data node 4 in this case is a GGSN. In an alternative implementation it may be a CGSN, combined GPRS Support Node, which is a packet data support node comprising both the functionality of an SGSN and the functionality of GGSN. Also the GGSN 4 comprises an IP BS Manager 41 and an UMTS BS Manager 44 communicating with UMTS BS Manager of UE 1. Further also GGSN comprises a second extended mapping means 43, here denoted Translation/Mapping Function, similar to Translation/Mapping Function 13 of UE 1. IP BS Manager 41 also comprises a Traffic Plane Function, TPF, 42 for performing charging and policy enforcement functionality in the GGSN and communicating with the Charging Rules Function, CRF.

AF 6 provides an application description or a service description to the CRF 5 over the Rx interface. CRF 5 comprises a mapping control means 51 controlling the mapping of the uplink as suggested by the user equipment 1, and it capable of accepting or rejecting it. In a particular embodiment it is also capable of, if rejecting a mapping established or suggested by UE 1, remapping it on to (an)other transmission resource or resources for a given service session. The input to CRF 5 or particularly to CRF control means 51 particularly comprises filter information describing how to identify both downlink and uplink packets belonging to the service (session) as well as the requirements of the application concerning transmission characteristics etc. The CRF control means 51 are responsible for creating or charging rules which are downloaded to GGSN 4. Hence, according to the invention an application signalling protocol, here SIP/SDP between UE 1 and AF 6 is used to establish a user session and the service level. Once the requested services has been granted for UE 1, transmission resources are established, for example one or more PDP contexts, by the UE 1.

According to the invention, UE 1 gets information, for example using ordinary signalling, that it may establish a transmission channel, e.g. a PDP context, for the purpose of a particular requested service. The specific kind of signalling is not significant on condition that UE can deduce what kind of transmission resource that should be requested. The UE initiates a Secondary PDP Context Activation procedure indicating a TFT (Traffic Flow Template, cf. 3GPP 23.060), which is tailored for the specific service and the UE indicates to the GGSN the ability to accept advisory uplink traffic mapping instructions. This may be given as a capability in the Primary PDP Context Activation Procedure in which case the GGSN is readily informed in the Primary PDP Context Activation procedure that the UE supports advisory uplink traffic mapping. Alternatively this may be indicated to the GGSN by means of an indicator in a TFT at activating the transmission channel for the specific service or by providing UE-generated mapping rules at activating the transmission channel for the specific service. As can be seen, there are several different ways of implementing the inventive concept.

The SGSN (not shown in this figure, cf. Fig. 1) proceeds in a conventional manner according to the Secondary PDP Context Activation procedure and sends a Create PDP Context Request to GGSN in a conventional manner with the difference that the declaration as to uplink mapping is included. In the implementation with an indicator in the TFT as referred to above, the indicator is included in the Create PDP Context Request whereas if the UE generates the mapping rules at activating the transmission channel, as also referred to above as being the third alternative, the mapping rules are included in the Create PDP Context Request.

TPF 42 interrogates CRF 5 for directives as to what QoS that should be aimed at what kind of uplink and downlink payload that should be allowed to travel on the transmission channel etc. The TPF 42 provides the TFT, and in the case of accompanying UE-generated mapping rules, these are also provided by TPF 42.

The CRF control means 51 validates the uplink mapping in that it is compared to the information received from the application function 6 in the first step. CRF 5 responds as defined for Gx interaction and extends the response with information on advisory uplink traffic mapping. Even if the CRF has gained knowledge about the UE supporting advisory uplink traffic mapping, the UE might still ignore the information. Only the last case as referred to above, in which the UE-generated mapping rules are included in the Create PDP Context Request, this information is provided to the CRF, but it does not indicate unambiguously that the UE actually reacts as advised. The information from the CRF (or PDF or PCCN) basically is of two different kinds, namely (FBC/policy filters for the IP flow of interest enabling the TPF/GGSN to perform FBC (Flow Based Charging) and policy control tasks, and, if needed or applicable, the amended uplink traffic mapping information.

The GGSN 4 sends the advisory uplink traffic mapping in the Create PDP Context Response to the SGSN which forwards the declaration of the advisory uplink traffic mapping in the Activate Secondary PDP Context Accept to the UE 1. An UE supporting the inventive concept or advisory uplink traffic mapping, will align the uplink traffic mapping with the advice. PDP Context Activation etc. is also described in 3GPP TS 23.060 as referred above. According to the invention, the filters from the charging rule/rules having authorized the use of a service is/are sent to the UE, so that the UE can use the mapping in a similar manner as the GGSN presently does for downlink traffic, i.e. how the GGSN presently uses TFTs for downlink traffic. For downlink resource control, TFTs are used, one TFT for each PDP context, wherein one TFT may contain several filters. A TFT implies that filters are given certain priorities, and the priorities of the filters define the evaluation order for all filters in all TFTs for an IP network connection downlink.

In one implementation of the invention the GGSN receives an indication from the UE that it accepts or follows advisory uplink traffic mapping, thus making it possible to confine the uplink traffic for the service to the appropriate PDP context, or more generally transmission resource.

In a particular embodiment, to which however the concept is not limited, the UE may declare the capability to handle uplink traffic mapping. A possible location for such an indication may for example be in a TFT IE (Information Element) at PDP Context Activation. The UE may also provide a suggested uplink mapping at PDP Context Activation.

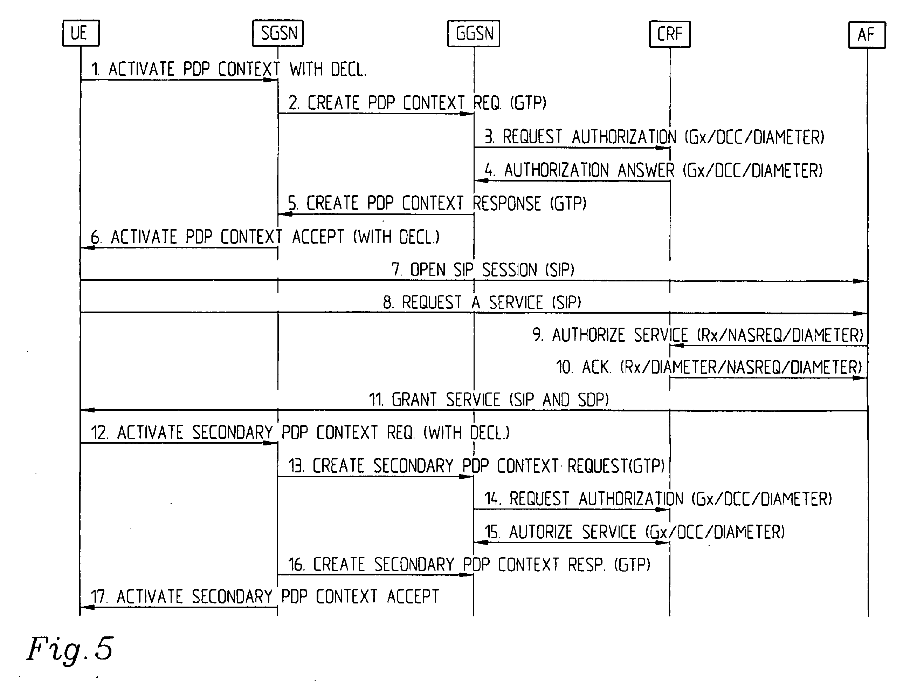

However, particularly the charging rule filters are to be used for uplink mapping purposes passed to or may be passed to the UE. The declaration, cf. Fig. 5, particularly comprises the advisory uplink traffic mapping in the declaration (secondary) PDP Context Accept, Modify PDP Context Request (in direction from the network to the UE) and Modify PDP Context Accept (network to MS direction) messages. Still further, in a particularly advantageous embodiment, the GGSN (or CGSN) and the CRF may negotiate advisory uplink traffic mapping and thus, if wanted or needed, modify the mapping suggestion made by the UE. This would require inclusion of the intended uplink traffic mapping at PDP Context Request, and possibly at PDP Context Modification. GGSN (or CGSN) particularly received filter data from the user station and the charging and/or policy handling node and acts as a transit node for the user station and the charging and/or policy handling node communicating such data.

It should be noted that many terminals that are in operation today might not include this feature. Then it would be up to the network to handle the function according to the present invention and then one option would be to utilize IMEI-SV. However, as suggested above (i.e. that the UE declares capability to handle uplink resource mapping or that the UE provides a suggested uplink transmission resource at PDP Activation, the network can assume that if it does receive a message which either says that the UE is able to handle uplink mapping or that the UE provides a proposed (established) uplink mapping, that it supports the function according to the present invention. If however none of these messages are transferred from the UE to the network, the network will operate in a legacy mode.

There are different possibilities. The network may be aware of the UE supporting uplink traffic mapping to transmission channels. The UE support may be different, for example unspecified, or the UE may declare the uplink traffic mapping at PDP establishment/modification, or the UE may require advice from the network concerning uplink traffic mapping. Particularly it is also an option for the network to provide advise to the UE concerning uplink traffic mapping.

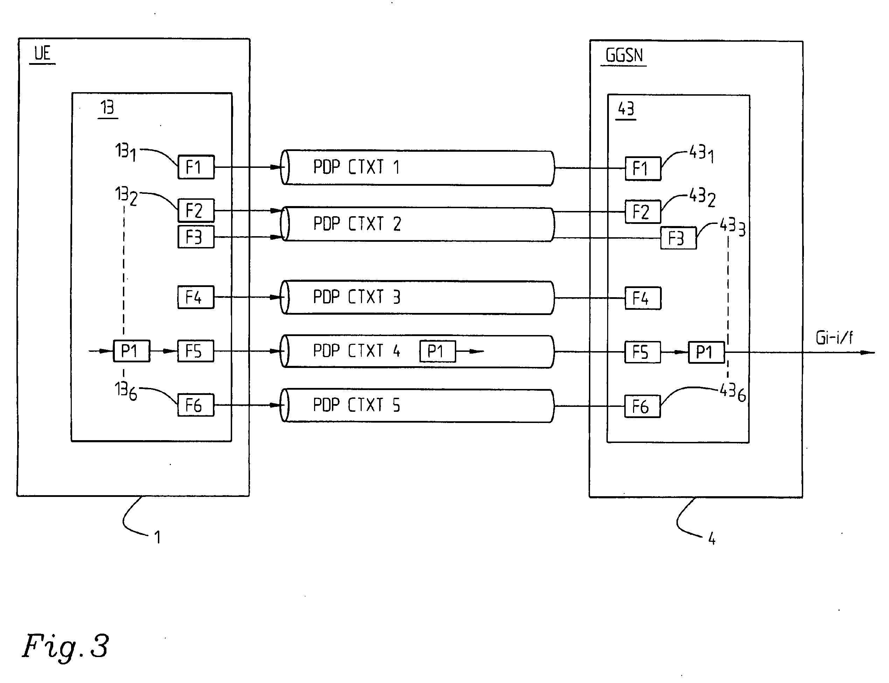

The block diagram of Fig. 3 schematically illustrates uplink traffic mapping of the user plane wherein an UE 1 comprises first extended mapping means 13 and a packet data node, here GGSN 4, also comprises second extended mapping means 43. Here the first extended mapping means comprises a number of filters F1-F6 13₁,...,13₆ for determining on which PDP Contexts PDP Packets are to be transferred. The second extended mapping means 43 in the GGSN 4 comprises an identical set of filters as declared by the UE. It is here supposed that a PDP packet P1 is incoming and that a check whether there is a packet header match, which is used to determine which PDP context that is to be used. It is here supposed that there is a match with F5 13₅. P1 is then transferred to GGSN in which there also is a match with filter F5, and P1 is forwarded over the Gi-interface to the Packet Data Network, PDN. According to the invention an uplink filtering is performed in GGSN, meaning that non-confirmed packets are discarded, whereas the actual uplink mapping is performed in the UE 1. Filtering means 43 in GGSN are also denoted uplink mapping means (second extended mapping means); extended in the sense that performing a downlink mapping is already known. Advantageously it is of course also performed a downlink mapping as known in the art which however is not further discussed in the present application.

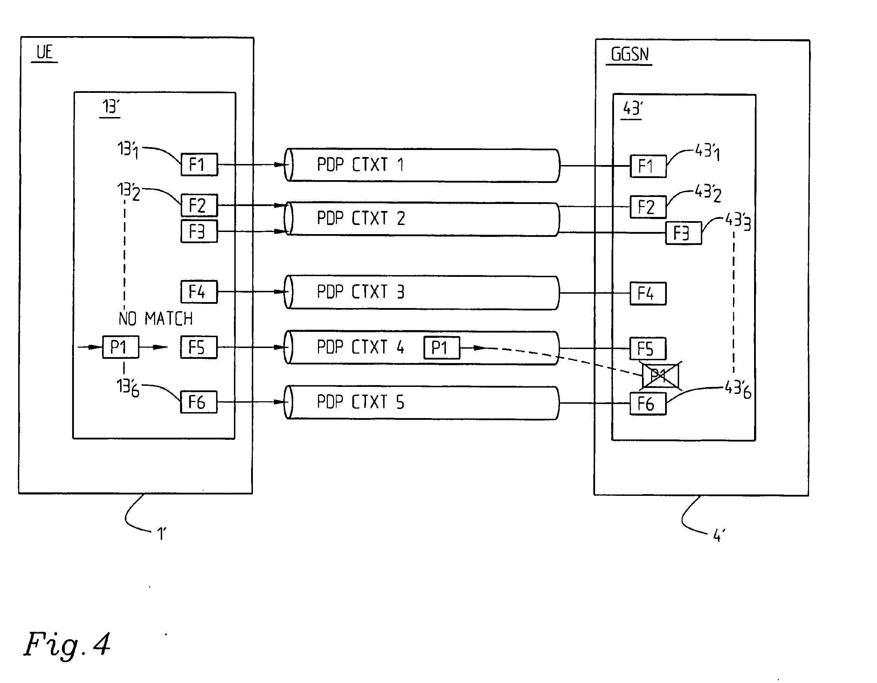

Fig. 4 shows a figure similar to that of Fig. 3 with user equipment UE 1' and the GGSN 4'. Filters F1 to F6 are provided in extended mapping means 13' or 43'. In this case, however, it is supposed that there is no packet header match with the filters in UE 1', but P1 it is still sent on PDP context 4 as in the preceding case. This is however detected in GGSNs second extended mapping means 43' with uplink filters, and since there is no matching filter, P1 is discarded (crossed out in Fig. 4).

Fig. 5 is a sequence diagram illustrating the signalling between the concerned nodes or functions UE, SGSN, GGSN, CRF and AF for establishment of uplink traffic mapping. In this embodiment it is supposed that the UE sends an Activate PDP Context Request with a declaration, 1, to SGSN. The declaration included in the Activate PDP Context Request comprises information about the intended uplink traffic mapping to this PDP context or an "open filter" and an indication that it supports "uplink mapping". It may indicate, (e.g. comprising indicating uplink mapping information) that the user equipment either strictly follows the mapping indicated, or that all uplink traffic for the session is subject to mapping declaration, or that the mapping is responsive to instructions from the network as to how uplink traffic is to be mapped to PDP context. The latter alternative implies that the network may modify the declaration provided from the UE. SGSN sends a Create PDP Context Request over GTP (GPRS Tunnelling Protocol) which transparently transfers the content of the declaration, (particularly also TFT Content for downlink mapping), to the GGSN (2). GGSN then sends the message Request Authorisation over Gx/DCC/Diameter to CRF, 3. This message is slightly modified in that the declaration information (uplink mapping) is included. Subsequently it is supposed that CRF provides an Authorisation Answer (over Gx/DCC/Diameter) to GGSN, 4, which hence also is slightly modified. GGSN provides a Create PDP Context Response (GTP) to SGSN, 5. In a particular embodiment GGSN is capable of modifying the uplink mapping, or particularly filter data. This may be done by including a new information element (IE) or by adding the information to the existing Protocol Configuration Options (PCO) information element, cf. the 3GPP Specification TS 29.060.

The UE declaration may be acknowledged by GGSN even if it is accepted, i.e. not changed. It should be clear that according to the inventive concept it is not necessary that GGSN is capable of modifying uplink mapping (or particularly of modifying TFT data if that is used for the uplink mapping).

An Activate PDP Context Accept is then sent to UE, 6, including the declaration. If applicable, it may indicate changed uplink traffic mapping.

Subsequently a message Open SIP Session, using SIP signalling, is sent (on the application level) from UE to AF, 7, using a control protocol, for example SIP or in another embodiment HTPP. It is followed by a Request for a Service, (SIP), 8, including control protocol identity, etc. and it is supposed that the AF authorises the service and sends a message using Rx/NASREQ/Diameter, 9, which is a message of granting bearer level authorisation for this service (ultimately) at the TPF/GGSN. The service description is not according to SDP format. An acknowledgement is then returned from CRF to AF, 10. The CRF has readily an association with the GGSN, handling the user session, so the authorisation may be associated with the appropriate user session when processing the message. Messages 9, 10 are particularly not modified and follow the 3GPP Specification TS 23.125.

Message 10 indicates that the CRF has registered the authorisation.

Subsequently a message Grant Service (here using SIP and SDP), 11, is sent from AF to UE, which conveys an SDP description of the service. Each IP flow has a separate entry on the description.

An Activate Secondary PDP Context Request, 12, including the declaration as discussed above is then sent from UE to SGSN. This message contains the TFT filters (for downlink mapping as is known per se) and the intended uplink traffic mapping according to the present invention. The SGSN then sends a Create Secondary PDP Context Request over GTP to GGSN, 13. GTP transparently transfers TFT content (for downlink mapping) to the GGSN.

GGSN then request authorisation (using Gx/DCC/Diameter) in a message to CRF, 14. This message contains the TFTs (for downlink control) and the uplink traffic mapping as indicated by the UE. CRF validates and matches the TFTs and the uplink mapping against the granted service, according to the information received from the AF. It is here supposed that there is a match or that the suggested uplink mapping is successfully validated and then a message Authorise Service, 15, is sent from CRF to GGSN. This message contains filters for the granted service. Preferably the registration of an uplink traffic mapping simultaneously includes installation of a "discarding filter" for that traffic on all other PDP contexts.

A Create Secondary PDP Context Response is then sent from SGSN to GGSN, 16. Subsequently an Activate Secondary PDP Context Accept with declaration is sent from SGSN to UE, 17.

Hence, in CRF, upon reception of message 14, a validation is performed against the authorisation result received in message 9 from AF from which it is known which QoS is and other transmission characteristics that are required etc.

It should be clear that the uplink mapping onto PDP contexts for a service session may involve mapping onto one single PDP context or onto two different PDP contexts or more depending implementations. It is for example possible that different QoSs are required for different "parts" of a service, for example voice can be sent on one PDP context whereas video is sent on another PDP context for example with a lower QoS. Any variation is in principle possible.

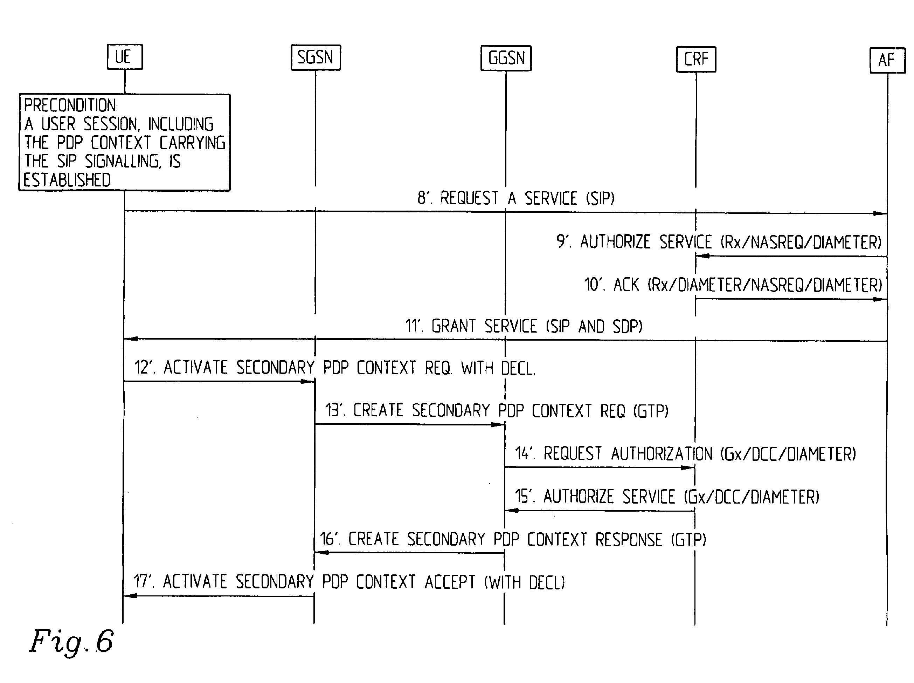

Fig. 6 shows a particular implementation of the present invention in which modification of established uplink mapping is supported, i.e. if CRF does not accept the uplink traffic mapping as established or suggested by the MS, the mapping may be modified. This sequence diagram is similar to the sequence diagram of Fig. 5, but the first seven messages are not illustrated. It is here a precondition that a user session, including the PDP context carrying the, here, SIP signalling, is established. Thus, it is here supposed that on UE sends a message Request a Service to AF, 8'. As referred to above, it is supposed that the service is authorized, 9' in a message granting bearer level authorisation for the service at the TPF/GGSN as in the preceding embodiment. As referred to above the service description is not according to SDP. The CRF has readily an association with GGSN, handling the user session, so the authorisation may be associated with the appropriate user session when processing the message. An acknowledgement, 10', is sent from CRF to AF meaning that the CRF has registered the authorisation.

Subsequently a message, 11', Grant Service is sent from AF to UE which also conveys an SDP description of the service. As referred to above each IP flow has a separate entry in the description.

Then it is supposed that the UE then sends an Activate Secondary PDP Context Request with declaration, 12', to SGSN. In this particular case it is supposed that the UE for example makes a mistake when mapping the service onto PDP context. Message 12' anyhow contains the TFT filters (for downlink mapping) and the (erroneous) intended uplink traffic mapping. SGSN sends a Create Secondary PDP Context Request, 13', to GGSN over the GTP with transparently transfers the TFT content. Subsequently GGSN sends a Request Authorisation Message, 14', to CRF, which message contains TFTs and intended uplink traffic mapping as indicated by the UE. The CRF performs the validation of the TFTs and the uplink mapping against the granted service. In this case it is supposed that CRF manages to match the request against an authorisation, granted by an AF, but establishes that the suggested mapping needs to be modified. A message Authorise Service, 15', containing the filters for detection of the granted service and the modified traffic mapping (TFT filters and the uplink mapping) is then sent to GGSN. It should be noted that the detection filters and TFT/uplink mapping patterns coincide in a normal case. This can be used for optimization purposes. As referred to above a discard filter is preferably installed.

Subsequently a Create Secondary PDP Context Response, 16', is sent from GGSN to SGSN, 16', according to which GGSN accepts the PDP Context Activation and provides a modified TFT for information to the UE, and the modified uplink traffic mapping to be obeyed by the UE (alternatively only modified uplink mapping or only modified TFT). It is here supposed, hence, that GGSN is capable of modifying TFT data, either through the introduction of a new IE type or through squeezing the new data into the PCO. Subsequently an Activate Secondary PDP Context Accept with the declaration, 17', is sent from SGSN to UE, indicating that SGSN accepts the PDP Context Activation and provides a modified TFT for information to the UE and/or the modified uplink traffic mapping to be followed by the UE.

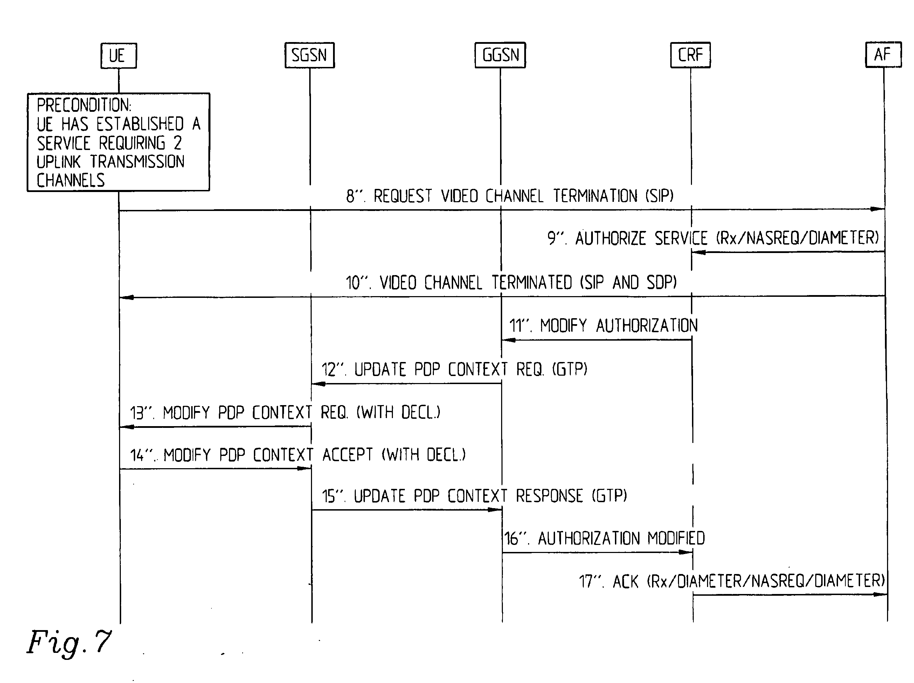

Fig. 7 is a block diagram similar to that of Fig. 5 showing an advantageous implementation supporting a network initiated uplink mapping change. It is here supposed that a service is up and running. It is also precondition that the UE has established a service requiring two uplink transmission channels. Hence, it is supposed that UE sends a Request for Video Channel Termination over SIP to AF, 8". It is thus a request for termination of the video send channel whereas the audio channel is to be retained. An Authorize Service message, 9", is sent from AF to CRF and the information in the message is that the authorisation for the video channel should be withdrawn. Message 10", Video Channel Terminated, conveys an SDP description of the (modified) service to the UE. From the CRF a message Modify Authorisation, 11", is sent to GGSN relating to the withdrawal of the video channel from the authorisation. This logical message may be a procedure, using DCC/Diameter messages. An update PDP Context Request, 12", is sent from GGSN to SGSN providing the modified TFT and uplink mapping information. A Modify PDP Context Request with the declaration, 13", provides a modified TFT (for information) and uplink mapping information (to be followed by the UE) from SGSN to UE. A modify PDP Context Accept is sent from UE to SGSN, 14", with declaration, i.e. the UE acknowledges that the modified uplink mapping is installed or established. An Update PDP Context Response, 15", is then sent from SGSN to GGSN, and a message Authorisation is Modified, 16", is provided to CRF, which in turn acknowledges with a message 17" indicating that CRF has withdrawn the video channel authorisation. It should be clear that this describes an example of an optional implementation not necessary for the basic function of the inventive concept.

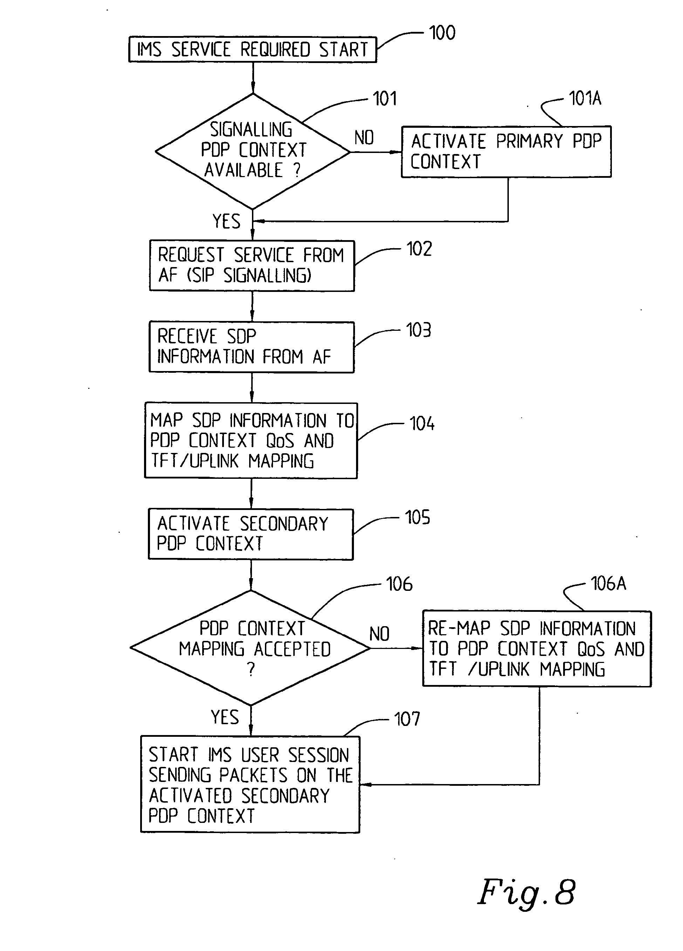

Fig. 8 is a flow diagram describing the procedures performed in the mobile user station, particularly the UE according to one embodiment in which it is supposed that remapping is supported. Thus, in a first step it is supposed that an IMS Service is required to be started up, 100. Then it is examined if a Signalling PDP Context is available, 101. If not, an Activate Primary PDP Context is performed, 101A, and subsequently a Service is requested from AF (in this case using SIP signalling), 102. As discussed earlier in the application SDP Information is received in MS from AF, 103. The MS performs a mapping of SDP Information to PDP context QoS and TFT/uplink mapping, 104. Subsequently an Activate Secondary PDP Context procedure is performed, 105. It is examined or established if the in MS established PDP context mapping is accepted, 106 (through messaging with CRF as discussed above). If not, a remapping of SDP Information to PDP context QoS and TFT/uplink mapping may be performed, 106A, according to information received from GGSN. If the messaging is accepted or if there has been a remapping, the IMS User Session is started by sending packets on the Activated Secondary PDP Context, 107.

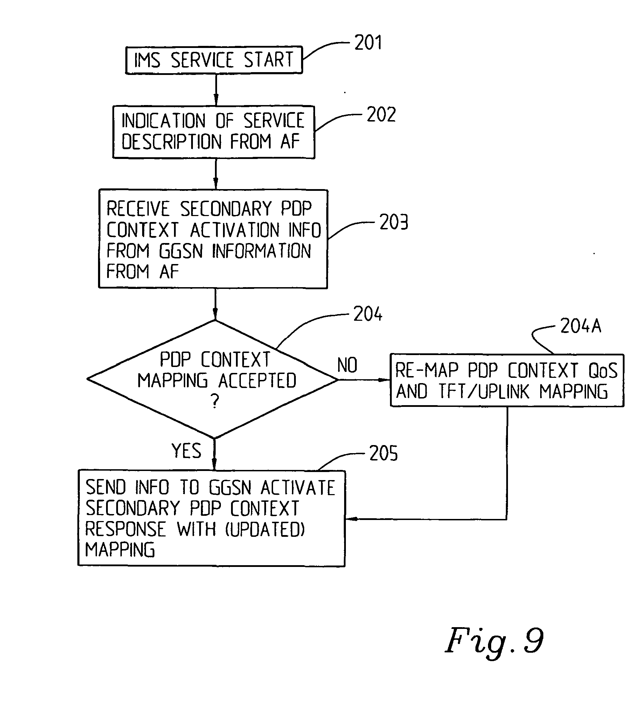

Fig. 9 is a very schematical flow diagram describing the procedure in a CRF according to one implementation of the present invention in which remapping is supported. Hence, it is supposed that an IMS Service is started, 201. The CRF receives an indication of the Service Description from AF, 202, as described above and subsequently receives Secondary PDP Context Activation Information from GGSN Information from AF, 203. It is established whether the PDP context mapping is accepted, 204, and if yes, information is sent to GGSN and a Secondary PDP Context Response is activated with accepted (updated) mapping, 205. If the PDP context mapping was not accepted, a remapping of PDP context QoS and TFT/uplink mapping is performed, 204A, as discussed above, i.e. information thereon is provided to the UE etc. Then it is proceeded to step 205 as discussed above.

It should be clear that the invention of course not is limited to the specifically illustrated embodiments, but that it can be varied in a number of ways within the scope of the appended claims. Particularly it is of course not limited to application in a GPRS/UMTS system and still further it is not limited to a particular service or to SIP. It is also not limited to the particular CRF node but it is applicable to any node having a similar functionality or more generally to any function having the similar functionalities and it does not necessarily have to be provided in one specific node but it may be distributed are generally provided for in a function. It may for example also be a Policy Decision Function (PDF) or a Policy and Charging Control Node (PCCN) or any node or function with one or more of these functionalities or similar functionalities. Still further the functionality of the charging and/or policy handling node (e.g. as a CRF, a PDF or a PCCN or similar) may also be integrated with or provided in a packet data node, e.g. a GGSN, a CGSN or a node with a similar functionality, or in some other node.

## Claims

1. A method for providing uplink transmission resource usage control in a communication system supporting communication of packet data for a mobile user station accessing/requesting access to services provided by an application function of an external packet data network, comprising
- establishing a user session relating to a service, to which access is requested by a mobile user station, using an application signalling protocol including provisioning of a service description, said service description listing which QoS and other transmission characteristics which are required for said requested service, from an application function (6,6₁) handling mobility management and call control of mobile user stations (1;1') requesting/accessing a service, to a charging and/or policy handling node,
**characterized in**
that it further comprises the steps of:
- providing a service description, said service description listing which QoS and other transmission characteristics which are required for said requested service from the application function to the mobile user station, hereafter called UE, using an application signalling protocol, wherein the UE comprises a packet data communication network bearer service manager (14) and an external IP data network bearer service manager (12) and first extended mapping means (13) adapted to provide interworking between corresponding parameters and mechanisms concerning a requested service in said packet data communication network bearer service manager (14) and said external data network bearer service manager (12),
- establishing, in said first extended mapping means of the UE, what transmission resources that are to be used for uplink traffic for the requested service during a session using said service description by mapping the service onto one or more PDP contexts of the packet data communication network that is/are to be used on the uplink for the requested service during a session,
- indicating by the UE in a resource reservation request to the packet data support node of said mapping rules generated by the UE,
- receiving said resource reservation request in the packet data support node and providing said UE generated mapping rules in a request for authorization from the packet data support node to the charging and/or policy handling node,
- validating in mapping control means in the charging and/or policy handling node said UE generated mapping rule as received in the request for authorization against said service description received from said application function,
- accepting, modifying or rejecting the uplink service-to-PDP context mapping for a service session by the mobile user station as established in said UE generated mapping rules by said charging and/or policy handling node by including, in a response to said request for authorization to said packet data support node, an information on advisory traffic mapping forwarding said information on advisory traffic mapping from said packet data support node to said UE in a response to said resource reservation request, aligning in the UE the said UE generated mapping rules with said advisory traffic mapping received in said response to said resource reservation request.

2. A method according to claim 1,
**characterized in**
that if any UE generated mapping rules are rejected in the charging and/or policy handling node, the method further comprises the step of:
- remapping, in said charging and/or policy handling node, the rejected service onto one or more other transmission resources.

3. A mobile user station (1) adapted to be used in a communication system supporting communication of packet data and comprising means for using an application signalling protocol with an application function (6), AF, of an external data network,
**characterized in**
that it comprises means for sending a message requesting a service to said AF, a packet data communication network bearer service manager (14) and an external IP data network bearer service manager (12) and first extended mapping means (13) adapted to provide interworking between corresponding parameters and mechanisms concerning said requested service in the packet data communication network bearer service manager (14) and the external data network bearer service manager (12), said first extended mapping means (13) being adapted to map transmission resources, PDP contexts, to services accessed via the AF (6) and to be used for a service session on the uplink, said first extended mapping means (13) further being adapted to receive service description information related to a requested service, said service description listing which QoS and other transmission characteristics which are required for said requested service, via the application signalling protocol from the AF (6), and in that the first extended mapping means (13) further is adapted to determine from said service description, which PDP contexts of the packet data communication network are to be used on the uplink for the requested service during a session, therefore generating mapping rules;
- means for indicating in a resource reservation request to the packet data support node of said generated mapping rules;
- means for receiving an information on advisory traffic mapping from said packet data support node in a response to said resource reservation request;
- means for aligning said generated mapping rules with said advisory traffic mapping received in said response to said resource reservation request.

4. A mobile user station (1) according to claim 3,
**characterized in**
that it is adapted to request an Internet Multimedia Service and in that it is adapted to use the Session based Initiation Protocol/Session Description Protocol for signalling with an application function (6) to obtain said service description.

5. A charging and/or policy handling node (5), in a communications system supporting communication of packet data, which is arranged to communicate with an application function, AF, (6), handling mobility management and call control of mobile user stations (1;1') requesting/accessing a service and a packet data support node (4), wherein for a mobile user station, UE, accessing/requesting access to services provided by the AF of an external packet data network, a user session relating to a service to which access is requested by the UE is established using an application signalling protocol including provisioning of a service description, said service description listing which QoS and other transmission characteristics which are required for said requested service, from the AF (6,6₁),
**characterized in**
that it comprises mapping control means (51) for validating mapping between the transmission resources onto one or more PDP contexts using mapping rules received from the UE over a packet data support node in an authorization request, said mapping rules indicating transmission resources to be used for the UE for uplink traffic for a requested service session, against information in a service description message received from the AF (6) relating to the requested service, said service description listing which QoS and other transmission characteristics which are required for said requested service, and to accept, modify or reject the uplink service-to-PDP context mapping for a service session by the UE as established in said UE generated mapping rules by including, in a response to said request for authorization to said packet data support node, an information on advisory traffic mapping.

6. A charging and/or policy handling node according to claim 5,
**characterized in**
that the mapping control means (51) are adapted to extract/handle information from an UE (1) indicating whether the UE (1) supports uplink controlled mapping and/or whether the UE (1) supports uplink controlled mapping but requires instructions from the charging and/or policy handling node (5).

7. A charging and/or policy handling node according to claim 5 or 6,
**characterized in**
that the mapping control means (51) are adapted to accept a mapping or not, and to provide a remapping for non-accepted mappings or to negotiate a mapping.

8. A charging and/or policy handling node according to any one of claims 5-7,
**characterized in**
that Traffic Flow Templates are used to provide mapping information for uplink and downlink communication.

9. A charging and/or policy handling node (5) according to any one of claims 5-8,
**characterized in**
that it comprises a Charging Rules Function (5), a Policy Decision Function or a Policy and Charging Control Node.

10. A packet data support node (4;4') in a communication system supporting communication of packet data, further arranged to be in communication with a charging and/or policy handling node (5) and mobile user stations (1), wherein for a mobile user station, UE, accessing/requesting access to services provided by an application function, AF, of an external packet data network, a user session relating to a service, to which access is requested by the UE, is established using an application signalling protocol including provisioning of a service description, said service description listing which QoS and other transmission characteristics which are required for said requested service, from an AF (6,6₁) handling mobility management and call control of mobile user stations (1;1¹) requesting/accessing a service, to a charging and/or policy handling node,
**characterized in**
that it comprises second extended mapping means (43) at least for uplink mapping, adapted to receive, from an UE, a resource reservation request with mapping rules comprising mapping information about transmission resources to be used on the uplink for a given user session of a requested service based on a service description mapping the requested service onto one or more PDP contexts, and to provide said UE generated mapping rules in a request for authorization to the charging and/or policy handling node, and to receive a response from said authorisation request from the charging and/or policy handling node comprising information on advisory mapping, and to forward said information on advisory traffic mapping from to said UE in a response to said resource reservation request.

11. A packet data support node (4;4') according to claim 10,
**characterized in**
that the second extended mapping means (43) also comprise mapping information about transmission resources, PDP contexts, to be used on the downlink for a given user session of the service.

12. A packet data support node (4;4') according to claim 10 or 11,
**characterized in**
that the second extended mapping means (43) comprise filtering means and are adapted to provide a filtering function of packets allowed/not allowed to use specific transmission resources, and in that they (43) are adapted to discard arriving packets from the UE:s which are not confirmed in the filters given by the mapping information.

13. A packet data support node (4;4') according to any one of claims 10-12,
**characterized in**
that the second extended mapping means (43) are adapted to receive filtering information, if a mapping establishment is modified, from a charging and/or policy handling node (5) and to install said filtering information such that it can be applied on arriving packets.

14. A packet data support node (4;4') according to any one of claims 10-13,
**characterized in**
that the second extended mapping means (43) are adapted to receive and handle a declaration message from an UE (1) containing information indicating whether uplink resource mapping is supported, to include information thereon in a request authorization message to a charging and/or policy handling node (5) and to include such uplink mapping information in communication with the charging and/or policy handling node (5) and with the UE (1) during activation of a Secondary PDP Context Procedure for service access.

15. A packet data support node (4;4') according to any one of claims 10-14,
**characterized in**
that it comprises a GGSN or a CGSN.

16. A packet data support node (4;4') according to any one of claims 10-15,
**characterized in**
that it comprises a GGSN or a CGSN functionality and in that it further comprises the functionality of a charging and/or policy handling node (5) according to any one of claims 5-9.

17. A system for providing uplink transmission resource usage control in a communications system supporting communication of packet data, comprising a number of packet data support nodes (4, 3), a number of charging and/or policy handling nodes (5), a number of application functions, AF, (6,6₁) handling mobility management and call control of mobile user stations (1;1') requesting/accessing a service provided by an external IP network, wherein for a mobile user station, UE, accessing/requesting access to services provided by an AF of an external packet data network, it is adapted to establish a user session relating to a service, which access is requested by the UE using an application signalling protocol, and wherein an AF (6,6₁) handling an UE requesting/accessing a service is adapted to send a service description to the UE and to a charging and/or policy handling node,
**characterized in**
that the system includes a mobile user station, UE, as in claim 3, a charging and/or policy handling node as in claim 5 and a packet data support node as in claim 10.

18. A system according to claim 17,
**characterized in**
that the mapping information also comprises information about mapping of transmission resources, PDP context(s), and the service for downlink communication.

19. A system according to claim 17 or 18,
**characterized in**
that the UE is adapted to send a mapping indication message comprising an indication that the functionality of establishment of uplink transmission resources is supported.

20. A system according to claim 17, 18 or 19,
**characterized in**
that the UE is adapted to send a mapping indication message comprising an indication that an uplink mapping instruction for mapping of transmission resources, PDP contexts, and services is requested from the charging and/or policy handling node relating to mapping at least on the uplink.

21. A system according to any one of claims 17-20,
**characterized in**
that the packet data support node comprises a GGSN or a CGSN.

22. A system at least according to claim 21,
**characterized in**
that the first extended mapping means (13) are adapted to map service related information of a Session Description Protocol to a number of PDP contexts QoS and TFT.

23. A system according to any one of the preceding claims,
**characterized in**
that the charging and/or policy handling node (5) control means (51) are adapted to perform remapping of a rejected PDP context-to-service mapping and to send information about the remapping to the UE.

24. A system according to any one of the preceding claims,
**characterized in**
that requested service comprises an Internet Multimedia Service.

25. A system arrangement according to claim 24,
**characterized in**
that all packets of a service session are mapped to one PDP context for uplink communication or that two or more different PDP contexts are used for different requested QoS of one and the same requested service session for uplink communication.

26. A system according to any one of the preceding claims,
**characterized in**
that the UE (1) is adapted to, using service session information received from the UE (6), send an activate secondary PDP context request containing mapping information relating to uplink or uplink and downlink communication.

27. A system according to claim 26,
**characterized in**
that the mapping information comprises one or more TFTs and/or modified TFTs relating to uplink or uplink and downlink traffic mapping information respectively.

28. A system according to claim 26 or 27,
**characterized in**
that the packet data node (4; 4') is adapted to request authorization for a requested service and for the uplink and downlink traffic mapping included in a Create Secondary PDP Context Request, from the charging and/or policy handling node.

29. A system according to claim 28,
**characterized in**
that the charging and/or policy handling node control means (51) are adapted to accept or reject or directly or indirectly modify the uplink mapping according to the uplink mapping information added to the Secondary PDP Context Request.

## Patentansprüche

1. Verfahren zum Bereitstellen von Aufwärtsstrecken-Übertragungsressourcennutzungssteuerung in einem Kommunikationssystem, das die Übermittlung von Paketdaten für eine mobile Teilnehmerstation unterstützt, die auf durch eine Anwendungsfunktion eines externen Paketdatennetzwerks bereitgestellte Dienste zugreift bzw. den Zugriff darauf anfordert, umfassend:
- Einrichten einer Teilnehmersitzung, die sich auf einen Dienst bezieht, auf den durch eine mobile Teilnehmerstation Zugriff angefordert wird, und zwar unter Verwendung eines Anwendungssignalisierungsprotokolls, was einschließt: Bereitstellen einer Dienstbeschreibung von einer Anwendungsfunktion (6, 6₁), die das Mobilitätsmanagement und die Verbindungssteuerung von mobilen Teilnehmerstationen (1; 1') verwaltet, die auf einen Dienst zugreifen bzw. den Zugriff darauf anfordern, für einen Abrechnungs- und/oder Richtlinienknoten, wobei die Dienstbeschreibung auflistet, welche QoS und andere Übertragungscharakteristika für den angeforderten Dienst benötigt werden,
**dadurch gekennzeichnet, dass** es ferner die Schritte umfasst:
- unter Verwendung eines Anwendungssignalisierungsprotokolls erfolgendes Bereitstellen einer Dienstbeschreibung von der Anwendungsfunktion für die mobile Teilnehmerstation, hierin nachstehend UE genannt, wobei die Dienstbeschreibung auflistet, welche QoS und andere Übertragungscharakteristika für den angeforderten Dienst benötigt werden, worin die UE einen Trägerdienstmanager für das Paketdatenkommunikationsnetzwerk (14) und einen Trägerdienstmanager für ein externes IP-Datennetzwerk (12) und erste Mittel zur erweiterten Zuordnung (13), die dafür eingerichtet sind, für das Zusammenwirken zwischen entsprechenden Parametern und Mechanismen bezüglich eines angeforderten Dienstes in dem Trägerdienstmanager für das Paketdatenkommunikationsnetzwerk (14) und dem Trägerdienstmanager für das externe IP-Datennetzwerk (12) zu sorgen,
- unter Verwendung der Dienstbeschreibung erfolgendes Festlegen in den ersten Mitteln zur erweiterten Zuordnung der UE, welche Übertragungsressourcen für Aufwärtsstreckenverkehr für den angeforderten Dienst während einer Sitzung zu verwenden sind, und zwar durch Zuordnen des Dienstes zu einem oder mehreren PDP-Kontexten des Paketdatenkommunikationsnetzwerks, der bzw. die auf der Aufwärtsstrecke während einer Sitzung für den angeforderten Dienst zu verwenden sind,
- durch die UE erfolgendes Angeben der durch die UE erzeugten Zuordnungsregeln in einer Ressourcenreservierungsanforderung an den Paketdatenunterstützungsknoten,
- Empfangen der Ressourcenreservierungsanforderung im Paketdatenunterstützungsknoten und Übergeben der durch die UE erzeugten Zuordnungsregeln in einer Autorisierungsanforderung vom Paketdatenunterstützungsknoten an den Abrechnungs- und/oder Richtlinienknoten,
- in Zuordnungssteuerungsmitteln im Abrechnungs- und/oder Richtlinienknoten erfolgendes Validieren der durch die UE erzeugten Zuordnungsregeln, wie sie in der Autorisierungsanforderung empfangen wurden, gegen die von der Anwendungsfunktion empfangene Dienstbeschreibung,
- Akzeptieren, Modifizieren oder Ablehnen der Aufwärtsstreckendienst-PDP-Kontext-Zuordnung für eine Dienstsitzung durch die mobile Teilnehmerstation, wie sie in den durch die UE erzeugten Zuordnungsregeln durch den Abrechnungs- und/oder Richtlinienknoten festgelegt wurde, und zwar durch: Einbeziehen einer Information über Beratungsverkehrszuordnung in eine Antwort auf die Autorisierungsanforderung an den Abrechnungs- und/oder Richtlinienknoten, Weiterleiten der Information über Beratungsverkehrszuordnung vom Paketdatenunterstützungsknoten an die UE in einer Antwort auf die Ressourcenreservierungsanforderung, Abgleichen der durch die UE erzeugten Zuordnungsregeln in der UE mit der in der Antwort auf die Ressourcenreservierungsanforderung empfangenen Beratungsverkehrszuordnung.

2. Verfahren nach Anspruch 1,
**dadurch gekennzeichnet, dass**:
wenn jegliche, durch die UE erzeugte Zuordnungsregeln im Abrechnungs- und/oder Richtlinienknoten abgelehnt werden, das Verfahren ferner den Schritt umfasst:
- im Abrechnungs- und/oder Richtlinienknoten erfolgendes Neuzuordnen des abgelehnten Dienstes zu einer oder mehreren anderen Übertragungsressourcen.

3. Mobile Teilnehmerstation (1), die dafür eingerichtet ist, in einem Kommunikationssystem verwendet zu werden, das die Übermittlung von Paketdaten unterstützt, und Mittel zum Verwenden eines Anwendungssignalisierungsprotokolls mit einer Anwendungsfunktion (6), AF, eines externen Paketdatennetzwerks umfasst,
**dadurch gekennzeichnet, dass** sie umfasst:
Mittel zum Senden eine Nachricht, die einen Dienst anfordert, an die AF, einen Trägerdienstmanager für das Paketdatenkommunikationsnetzwerk (14) und einen Trägerdienstmanager für ein externes IP-Datennetzwerk (12) und erste Mittel zur erweiterten Zuordnung (13), die dafür eingerichtet sind, für das Zusammenwirken zwischen entsprechenden Parametern und Mechanismen bezüglich des angeforderten Dienstes im Trägerdienstmanager für das Paketdatenkommunikationsnetzwerk (14) und im Trägerdienstmanager für das externe IP-Datennetzwerk (12) zu sorgen, wobei die ersten Mittel zur erweiterten Zuordnung (13) dafür eingerichtet sind, Übertragungsressourcen, PDP-Kontexte, Diensten zuzuordnen, auf die über die AF (6) zugegriffen wird und die für eine Dienstsitzung auf der Aufwärtsstrecke zu verwenden sind, wobei die ersten Mittel zur erweiterten Zuordnung (13) ferner dafür eingerichtet sind, über das Anwendungssignalisierungsprotokoll von der AF (6) Dienstbeschreibungsinformation zu empfangen, die sich auf einen angeforderten Dienst bezieht, wobei die Dienstbeschreibung auflistet, welche QoS und andere Übertragungscharakteristika für den angeforderten Dienstbenötigt werden, und dadurch, dass die ersten Mittel zur erweiterten Zuordnung (13) ferner dafür eingerichtet sind, aus der Dienstbeschreibung zu bestimmen, welche PDP-Kontexte des Paketdatenkommunikationsnetzwerks während einer Sitzung für den angeforderten Dienst auf der Aufwärtsstrecke zu verwenden sind, weswegen Zuordnungsregeln erzeugt werden können;
- Mittel zum Angeben der erzeugten Zuordnungsregeln in einer Ressourcenreservierungsanforderung an den Paketdatenunterstützungsknoten,
- Mittel zum Empfangen einer Information über Beratungsverkehrszuordnung von dem Paketdatenunterstützungsknoten in einer Antwort auf die Ressourcenreservierungsanforderung;
- Mittel zum Abgleichen der erzeugten Zuordnungsregeln mit der in der Antwort auf die Ressourcenreservierungsanforderung empfangenen Beratungsverkehrszuordnung.

4. Mobile Teilnehmerstation (1) nach Anspruch 3,
**dadurch gekennzeichnet**:
dass sie dafür eingerichtet ist, einen Internet-Multimediadienst anzufordern, und dass sie dafür eingerichtet ist, das sitzungsgestützte Einleitungsprotokoll bzw. Sitzungsbeschreibungsprotokoll zum Signalisieren mit einer Anwendungsfunktion (6) zu verwenden, um die Dienstbeschreibung zu erlangen.

5. Abrechnungs- und/oder Richtlinienknoten (5) in einem Kommunikationssystem, das die Übermittlung von Paketdaten unterstützt, der dafür eingerichtet ist, mit einer Anwendungsfunktion, AF, (6), die das Mobilitätsmanagement und die Verbindungssteuerung von mobilen Teilnehmerstationen (1; 1') verwaltet, die auf einen Dienst zugreifen bzw. den Zugriff darauf anfordern, und mit einem Paketdatenunterstützungsknoten (4) zu kommunizieren, worin für eine mobile Teilnehmerstation, UE, die auf durch die AF eines externen Paketdatennetzwerks bereitgestellte Dienste zugreift bzw. den Zugriff darauf anfordert, eine Teilnehmersitzung eingerichtet wird, die sich auf einen Dienst bezieht, auf den durch die UE Zugriff angefordert wird, und zwar unter Verwendung eines Anwendungssignalisierungsprotokolls, was einschließt: Bereitstellen einer Dienstbeschreibung von der AF (6, 6₁), wobei die Dienstbeschreibung auflistet, welche QoS und andere Übertragungscharakteristika für den angeforderten Dienst benötigt werden,
**dadurch gekennzeichnet**:
dass er Zuordnungssteuerungsmittel (51) zum Validieren der Zuordnung zwischen den Übertragungsressourcen und einem oder mehreren PDP-Kontexten gegen Information in einer von der AF (6) empfangenen Dienstbeschreibungsnachricht bezüglich des angeforderten Dienstes umfasst, und zwar unter Verwendung von Zuordnungsregeln, die in einer Autorisierungsanforderung von der UE über einen Paketdatenunterstützungsknoten empfangen wurden, wobei die Zuordnungsregeln Übertragungsressourcen angeben, die für die UE für Aufwärtsstreckenverkehr für eine angeforderte Dienstsitzung zu verwenden sind, wobei die Dienstbeschreibung auflistet, welche QoS und andere Übertragungscharakteristika für den angeforderten Dienst benötigt werden, und zum Akzeptieren, Modifizieren oder Ablehnen der Zuordnung von Aufwärtsstreckendienst zu PDP-Kontext für eine Dienstsitzung durch die UE, wie sie in den durch die UE erzeugten Zuordnungsregeln festgelegt wurde, indem in eine Antwort auf die Autorisierungsanforderung an den Paketdatenunterstützungsknoten eine Information über Beratungsverkehrszuordnung einbezogen wird.

6. Abrechnungs- und/oder Richtlinienknoten nach Anspruch 5,
**dadurch gekennzeichnet**:
dass die Zuordnungssteuerungsmittel (51) dafür eingerichtet sind, Information von einer UE (1) zu extrahieren bzw. verarbeiten, die angibt, ob die UE (1) aufwärtsstreckengesteuerte Zuordnung unterstützt und/oder ob die UE (1) zwar aufwärtsstreckengesteuerte Zuordnung unterstützt, aber Anweisungen vom Abrechnungs- und/oder Richtlinienknoten (5) benötigt.

7. Abrechnungs- und/oder Richtlinienknoten nach Anspruch 5 oder 6,
**dadurch gekennzeichnet**:
dass die Zuordnungssteuerungsmittel (51) dafür eingerichtet sind, eine Zuordnung zu akzeptieren oder nicht und eine Neuzuordnung für nicht akzeptierte Zuordnungen bereitzustellen oder eine Zuordnung auszuhandeln.

8. Abrechnungs- und/oder Richtlinienknoten nach einem der Ansprüche 5 bis 7,
**dadurch gekennzeichnet**:
dass Verkehrsflussschablonen verwendet werden, um Zuordnungsinformation für Aufwärtsstrecken- und Abwärtsstreckenkommunikation bereitzustellen.

9. Abrechnungs- und/oder Richtlinienknoten (5) nach einem der Ansprüche 5 bis 8,
**dadurch gekennzeichnet**:
dass er eine Abrechnungsregelfunktion (5), eine Richtlinienentscheidungsfunktion oder einen Richtlinien- und Abrechnungssteuerungsknoten umfasst.

10. Paketdatenunterstützungsknoten (4; 4') in einem Kommunikationssystem, das die Übermittlung von Paketdaten unterstützt, ferner dafür eingerichtet, mit einem Abrechnungs- und/oder Richtlinienknoten (5) und mobilen Teilnehmerstationen (1) in Kommunikation zu stehen, worin für eine mobile Teilnehmerstation, UE, die auf durch eine Anwendungsfunktion, AF, eines externen Paketdatennetzwerks bereitgestellte Dienste zugreift bzw. den Zugriff darauf anfordert, eine Teilnehmersitzung eingerichtet wird, die sich auf einen Dienst bezieht, auf den durch die UE Zugriff angefordert wird, und zwar unter Verwendung eines Anwendungssignalisierungsprotokolls, was einschließt: Bereitstellen einer Dienstbeschreibung von einer AF (6, 6₁), die das Mobilitätsmanagement und die Verbindungssteuerung von mobilen Teilnehmerstationen (1; 1') verwaltet, die auf einen Dienst zugreifen bzw. den Zugriff darauf anfordern, für einen Abrechnungs- und/oder Richtlinienknoten, wobei die Dienstbeschreibung auflistet, welche QoS und andere Übertragungscharakteristika für den angeforderten Dienst benötigt werden, und zwar
**dadurch gekennzeichnet**:
dass er zweite Mittel zur erweiterten Zuordnung (43) zumindest zum Aufwärtsstreckenzuordnen umfasst, die dafür eingerichtet sind, von einer UE eine Ressourcenreservierungsanforderung mit Zuordnungsregeln zu empfangen, die Zuordnungsinformation über Übertragungsressourcen umfassen, welche für eine gegebene Teilnehmersitzung eines angeforderten Dienstes auf der Aufwärtsstrecke zu verwenden sind, und zwar auf der Grundlage einer Dienstbeschreibung, die den angeforderten Dienst einem oder mehreren PDP-Kontexten zuordnet, und die durch die UE erzeugten Zuordnungsregeln in einer Autorisierungsanforderung an den Abrechnungs- und/oder Richtlinienknoten zu übergeben, und vom Abrechnungs- und/oder Richtlinienknoten eine Antwort auf die Autorisierungsanforderung zu empfangen, die Information über Beratungsverkehrszuordnung umfasst, und die Information über Beratungsverkehrszuordnung in einer Antwort auf die Ressourcenreservierungsanforderung zu der UE weiterzuleiten.

11. Paketdatenunterstützungsknoten (4; 4') nach Anspruch 10,
**dadurch gekennzeichnet**:
dass die zweiten Mittel zur erweiterten Zuordnung (43) außerdem Zuordnungsinformation über Übertragungsressourcen, PDP-Kontexte, umfassen, die für eine gegebene Teilnehmersitzung des Dienstes auf der Abwärtsstrecke zu verwenden sind.

12. Paketdatenunterstützungsknoten (4; 4') nach Anspruch 10 oder 11,
**dadurch gekennzeichnet**:
dass die zweiten Mittel zur erweiterten Zuordnung (43) Filtermittel umfassen und dafür eingerichtet sind, eine Filterfunktion von Paketen bereitzustellen, denen gestattet bzw. nicht gestattet ist, spezifische Übertragungsressourcen zu verwenden, und dadurch, dass sie (43) dafür eingerichtet sind, ankommende Pakete von den UEs zu verwerfen, die in den Filtern nicht durch die Zuordnungsinformation bestätigt werden.

13. Paketdatenunterstützungsknoten (4; 4') nach einem der Ansprüche 10 bis 12,
**dadurch gekennzeichnet**:
dass die zweiten Mittel zur erweiterten Zuordnung (43) dafür eingerichtet sind, wenn eine Zuordnungsfestlegung modifiziert wird, Filterinformation von einem Abrechnungs- und/oder Richtlinienknoten (5) zu empfangen und die Filterinformation zu installieren, sodass sie auf ankommende Pakete angewendet werden kann.

14. Paketdatenunterstützungsknoten (4; 4') nach einem der Ansprüche 10 bis 13,
**dadurch gekennzeichnet**:
dass die zweiten Mittel zur erweiterten Zuordnung (43) dafür eingerichtet sind, eine Deklarationsnachricht von einer UE (1) zu empfangen und zu verarbeiten, die Information enthält, welche angibt, ob Aufwärtsstreckenressourcenzuordnung unterstützt wird, Information darüber in eine Autorisierungsanforderung an einen Abrechnungs- und/oder Richtlinienknoten (5) einzuschließen und während der Aktivierung einer Sekundär-PDP-Kontext-Prozedur für den Dienstzugriff solche Aufwärtsstreckenzuordnungsinformation in die Kommunikation mit dem Abrechnungs- und/oder Richtlinienknoten (5) und mit der UE (1) einzuschließen.

15. Paketdatenunterstützungsknoten (4; 4') nach einem der Ansprüche 10 bis 14,
**dadurch gekennzeichnet**:
dass er einen GGSN oder einen CGSN umfasst.

16. Paketdatenunterstützungsknoten (4; 4') nach einem der Ansprüche 10 bis 15,
**dadurch gekennzeichnet**:
dass er die Funktionalität eines GGSN oder eines CGSN umfasst und dass er ferner die Funktionalität eines Abrechnungs- und/oder Richtlinienknotens (5) nach einem der Ansprüche 5 bis 9 umfasst.

17. System zum Bereitstellen von Aufwärtsstrecken-Übertragungsressourcennutzungssteuerung in einem die Übermittlung von Paketdaten unterstützenden Kommunikationssystem, das eine Anzahl von Paketdatenunterstützungsknoten (4, 3), eine Anzahl von Abrechnungs- und/oder Richtlinienknoten (5), eine Anzahl von Anwendungsfunktionen, AF, (6, 6₁), die das Mobilitätsmanagement und die Verbindungssteuerung von mobilen Teilnehmerstationen (1; 1') verwalten, die auf einen durch externes IP-Netzwerk bereitgestellten Dienst zugreifen bzw. den Zugriff darauf anfordern, wobei es dafür eingerichtet ist, für eine mobile Teilnehmerstation, UE, die auf einen durch eine AF eines externen Paketdatennetzwerks bereitgestellten Dienst zugreift bzw. den Zugriff darauf anfordert, eine Teilnehmersitzung einzurichten, die sich auf einen Dienst bezieht, auf den durch die UE Zugriff angefordert wird, und zwar unter Verwendung eines Anwendungssignalisierungsprotokolls, und worin eine AF, (6, 6₁), welche die Anforderung eines Dienstes bzw. den Zugriff darauf durch eine UE verwaltet, dafür eingerichtet ist, eine Dienstbeschreibung an die UE und an einen Abrechnungs- und/oder Richtlinienknoten zu senden,
**dadurch gekennzeichnet**:
dass das System eine mobile Teilnehmerstation, UE, nach Anspruch 3, einen Abrechnungs- und/oder Richtlinienknoten nach Anspruch 5 und einen Paketdatenunterstützungsknoten nach Anspruch 10 einschließt.

18. System nach Anspruch 17,
**dadurch gekennzeichnet**:
dass die Zuordnungsinformation auch Information über die Zuordnung von Übertragungsressourcen, PDP-Kontext(en) und den Dienst für die Abwärtsstreckenkommunikation umfasst.

19. System nach Anspruch 17 oder 18,
**dadurch gekennzeichnet**:
dass die UE dafür eingerichtet ist, eine Zuordnungsangabenachricht zu senden, die eine Angabe umfasst, dass die Funktionalität der Einrichtung von Aufwärtsstrecken-Übertragungsressourcen unterstützt wird.

20. System nach Anspruch 17, 18 oder 19,
**dadurch gekennzeichnet**:
dass die UE dafür eingerichtet ist, eine Zuordnungsangabenachricht zu senden, die eine Angabe umfasst, dass eine Aufwärtsstrecken-Zuordnungsanweisung zum Zuordnen von Übertragungsressourcen, PDP-Kontexten und Dienst, die sich zumindest auf die Zuordnung auf der Aufwärtsstrecke bezieht, vom Abrechnungs- und/oder Richtlinienknoten angefordert wird.

21. System nach Anspruch 17 bis 20,
**dadurch gekennzeichnet**:
dass der Paketdatenunterstützungsknoten einen GGSN oder einen CGSN umfasst.

22. System mindestens nach Anspruch 21,
**dadurch gekennzeichnet**:
dass die ersten Mittel zur erweiterten Zuordnung (13) dafür eingerichtet sind, dienstbezogene Information eines Sitzungsbeschreibungsprotokolls einer Anzahl von PDP-Kontexten, QoS und TFT zuzuordnen.

23. System nach einem der vorhergehenden Ansprüche,
**dadurch gekennzeichnet**:
dass die Steuerungsmittel (51) des Abrechnungs- und/oder Richtlinienknotens (5) dafür eingerichtet sind, die Neuzuordnung einer abgelehnten PDP-Kontext-Dienst-Zuordnung durchzuführen und Information über die Neuzuordnung an die UE zu senden.

24. System nach einem der vorhergehenden Ansprüche,
**dadurch gekennzeichnet**:
dass der angeforderte Dienst einen Internet-Multimediadienst umfasst.

25. Systemanordnung nach Anspruch 24,
**dadurch gekennzeichnet**:
dass alle Pakete einer Dienstsitzung einem PDP-Kontext zur Aufwärtsstreckenkommunikation zugeordnet werden oder dass für unterschiedliche angeforderte QoS von ein und derselben angeforderten Dienstsitzung zwei oder mehr verschiedene PDP-Kontexte zur Aufwärtsstreckenkommunikation verwendet werden.

26. System nach einem der vorhergehenden Ansprüche,
**dadurch gekennzeichnet**:
dass die UE (1) dafür eingerichtet ist, unter Verwendung von Dienstsitzungsinformation, die von der AF (6) empfangen wurde, eine Aufforderung zur Aktivierung eines sekundären PDP-Kontexts zu senden, die Zuordnungsinformation bezüglich der Aufwärtsstrecken- oder der Aufwärtsstrecken- und Abwärtsstreckenkommunikation enthält.

27. System nach Anspruch 26,
**dadurch gekennzeichnet**:
dass die Zuordnungsinformation einen oder mehrere TFTs und/oder modifizierte TFTs umfasst, die sich auf Aufwärtsstrecken- oder bzw. Aufwärtsstrecken- und Abwärtsstrecken-Verkehrszuordnungsinformation beziehen.

28. System nach Anspruch 26 oder 27,
**dadurch gekennzeichnet**:
dass der Paketdatenknoten (4; 4') dafür eingerichtet ist, vom Abrechnungs- und/oder Richtlinienknoten Autorisierung für einen angeforderten Dienst und für die Aufwärtsstrecken- und Abwärtsstrecken-Verkehrszuordnung anzufordern, und zwar eingeschlossen in eine Aufforderung zur Erzeugung eines sekundären PDP-Kontexts.

29. System nach Anspruch 28,
**dadurch gekennzeichnet**:
dass die Steuerungsmittel (51) des Abrechnungs- und/oder Richtlinienknotens dafür eingerichtet sind, die Aufwärtsstreckenzuordnung gemäß der zur Anforderung eines sekundären PDP-Kontexts hinzugefügten Aufwärtsstreckenzuordnungsinformation zu akzeptieren oder abzulehnen oder direkt oder indirekt zu modifizieren.

## Revendications

1. Procédé de fourniture de commande d'utilisation de ressources de transmission en liaison montante dans un système de communication prenant en charge une communication de données en paquets pour une station d'utilisateur mobile accédant / demandant accès à des services fournis par une fonction d'application d'un réseau de données en paquets externe, comprenant les étapes ci-dessous consistant à :
- établir une session d'utilisateur connexe à un service, auquel un accès est demandé par une station d'utilisateur mobile, en utilisant un protocole de signalisation d'applications incluant le provisionnement d'une description de services, ladite description de services répertoriant quelle qualité QoS et quelles autres caractéristiques de transmission sont requises pour ledit service demandé, d'une fonction d'application (6, 6₁) gérant une gestion de la mobilité et une commande d'appels de stations d'utilisateur mobiles (1 ; 1') demandant / accédant à un service, à un noeud de gestion de facturation et/ou de politiques ;
**caractérisé en ce que** il comporte en outre les étapes ci-dessous consistant à :
- fournir une description de services, ladite description de services répertoriant quelle qualité QoS et quelles autres caractéristiques de transmission sont requises pour ledit service demandé de la fonction d'application à la station d'utilisateur mobile, ci-après appelé équipement UE, en utilisant un protocole de signalisation d'applications, dans lequel l'équipement UE comporte un gestionnaire de services de porteuse de réseau de communication de données en paquets (14) et un gestionnaire de services de porteuse de réseau de données IP externe (12), et un premier moyen de mise en correspondance étendu (13) apte à fournir un interfonctionnement entre des mécanismes et paramètres correspondants concernant un service demandé dans ledit gestionnaire de services de porteuse de réseau de communication de données en paquets (14) et ledit gestionnaire de services de porteuse de réseau de données IP externe (12),
- établir, dans ledit premier moyen de mise en correspondance étendu de l'équipement UE, quelles ressources de transmission doivent être utilisées pour le trafic en liaison montante pour le service demandé au cours d'une session utilisant ladite description de services, en mettant en correspondance le service sur un ou plusieurs contextes PDP, du réseau de communication de données en paquets, qui doit ou doivent être utilisés sur la liaison montante pour le service demandé au cours d'une session ;
- indiquer, par le biais de l'équipement UE, dans une demande de réservation de ressources, au noeud de support de données en paquets, lesdites règles de mise en correspondance générées par l'équipement UE ;
- recevoir ladite demande de réservation de ressources dans le noeud de support de données en paquets et fournir lesdites règles de mise en correspondance générées par l'équipement UE dans une demande d'autorisation, du noeud de support de données en paquets au noeud de gestion de facturation et/ou de politiques ;
- valider, dans le moyen de commande de mise en correspondance au sein du noeud de gestion de facturation et/ou de politiques, ladite règle de mise en correspondance générée par l'équipement UE telle que reçue dans la demande d'autorisation par rapport à ladite description de services reçue à partir de ladite fonction d'application ;
- accepter, modifier ou rejeter la mise en correspondance « de services en liaison montante à contextes PDP » pour une session de service, par le biais de la station d'utilisateur mobile, telle qu'elle est établie dans lesdites règles de mise en correspondance générées par l'équipement UE, par ledit noeud de gestion de facturation et/ou de politiques, en incluant, dans une réponse à ladite demande d'autorisation audit noeud de support de données en paquets, des informations sur une mise en correspondance de trafic d'orientation, en acheminant lesdites informations sur une mise en correspondance de trafic d'orientation, dudit noeud de support de données en paquets audit équipement UE, dans une réponse à ladite demande de réservation de ressources, en alignant, dans l'équipement UE, lesdites règles de mise en correspondance générées par l'équipement UE avec ladite mise en correspondance de trafic d'orientation reçue dans ladite réponse à ladite demande de réservation de ressources.

2. Procédé selon la revendication 1,
**caractérisé en ce que**
si des quelconques règles de mise en correspondance générées par l'équipement UE sont rejetées dans le noeud de gestion de facturation et/ou de politiques, le procédé comprend en outre l'étape ci-dessous consistant à :
- mettre à nouveau en correspondance, dans ledit noeud de gestion de facturation et/ou de politiques, le service rejeté sur une ou plusieurs autres ressources de transmission.

3. Station d'utilisateur mobile (1) apte à être utilisée dans un système de communication prenant en charge une communication de données en paquets et comprenant un moyen pour utiliser un protocole de signalisation d'applications avec une fonction d'application (6), AF, d'un réseau de données externe,
**caractérisée en ce qu'**elle comporte :
- un moyen pour envoyer un message demandant un service à ladite fonction AF, un gestionnaire de services de porteuse de réseau de communication de données en paquets (14) et un gestionnaire de services de porteuse de réseau de données IP externe (12), et un premier moyen de mise en correspondance étendu (13) apte à fournir un interfonctionnement entre des mécanismes et paramètres correspondants concernant un service demandé dans le gestionnaire de services de porteuse de réseau de communication de données en paquets (14) et le gestionnaire de services de porteuse de réseau de données IP externe (12), ledit premier moyen de mise en correspondance étendu (13) étant apte à mettre en correspondance des ressources de transmission, et des contextes PDP, sur des services accessibles par le biais de la fonction AF (6), et devant être utilisés pour une session de service sur la liaison montante, ledit premier moyen de mise en correspondance étendu (13) étant en outre apte à recevoir des informations de description de services connexes à un service demandé, ladite description de services répertoriant quelle qualité QoS et quelles autres caractéristiques de transmission sont requises pour ledit service demandé, par l'intermédiaire du protocole de signalisation d'applications à partir de la fonction AF (6), et en ce que le premier moyen de mise en correspondance étendu (13) est en outre apte à déterminer, à partir de ladite description de services, quels contextes PDP du réseau de communication de données en paquets doivent être utilisés sur la liaison montante pour le service demandé au cours d'une session, ce qui permet par conséquent de générer des règles de mise en correspondance ;
- un moyen pour indiquer, dans une demande de réservation de ressources au noeud de support de données en paquets, lesdites règles de mise en correspondance générées ;
- un moyen pour recevoir des informations sur une mise en correspondance de trafic d'orientation, en provenance dudit noeud de support de données en paquets, dans une réponse à ladite demande de réservation de ressources ;
- un moyen pour aligner lesdites règles de mise en correspondance générées avec ladite mise en correspondance de trafic d'orientation reçue dans ladite réponse à ladite demande de réservation de ressources.

4. Station d'utilisateur mobile (1) selon la revendication 3,
**caractérisée en ce que**
elle est apte à demander un service multimédia Internet et **en ce qu'**elle est apte à utiliser le protocole d'ouverture à base de session / protocole de description de session en vue d'une signalisation avec une fonction d'application (6) pour obtenir ladite description de services.

5. Noeud de gestion de facturation et/ou de politiques (5), dans un système de communication prenant en charge une communication de données en paquets, lequel est agencé de manière à communiquer avec une fonction d'application, AF, (6), gérant une gestion de la mobilité et une commande d'appels de stations d'utilisateur mobiles (1 ; 1') demandant / accédant à un service, et avec un noeud de support de données en paquets (4), dans lequel, pour une station d'utilisateur mobile, UE, accédant / demandant accès à des services fournis par la fonction AF d'un réseau de données en paquets externe, une session d'utilisateur connexe à un service auquel l'accès est demandé par l'équipement UE est établie en utilisant un protocole de signalisation d'applications incluant le provisionnement d'une description de services, ladite description de services répertoriant quelle qualité QoS et quelles autres caractéristiques de transmission sont requises pour ledit service demandé, à partir de la fonction AF (6, 6₁) ;
**caractérisé en ce que**
il comporte un moyen de commande de mise en correspondance (51) pour valider une mise en correspondance entre les ressources de transmission sur un ou plusieurs contextes PDP, en utilisant des règles de mise en correspondance reçues en provenance de l'équipement UE sur un noeud de support de données en paquets dans une demande d'autorisation, lesdites règles de mise en correspondance indiquant des ressources de transmission devant être utilisées pour l'équipement UE dans le cadre du trafic en liaison montante pour une session de service demandé, par rapport à des informations dans un message de description de services reçu à partir de la fonction AF (6) connexe au service demandé, ladite description de services répertoriant quelle qualité QoS et quelles autres caractéristiques de transmission sont requises pour ledit service demandé, et pour accepter, modifier ou rejeter la mise en correspondance de « services en liaison montante à contextes PDP » pour une session de service, par le biais de l'équipement UE, telle qu'elle est établie dans lesdites règles de mise en correspondance générées par l'équipement UE, en incluant, dans une réponse à ladite demande d'autorisation audit noeud de support de données en paquets, des informations sur une mise en correspondance de trafic d'orientation.

6. Noeud de gestion de facturation et/ou de politiques selon la revendication 5,
**caractérisé en ce que**
le moyen de commande de mise en correspondance (51) est apte à extraire / traiter des informations, en provenance d'un équipement UE (1), indiquant si l'équipement UE (1) prend en charge une mise en correspondance commandée en liaison montante, et/ou si l'équipement UE (1) prend en charge une mise en correspondance commandée en liaison montante mais nécessite des instructions en provenance du noeud de gestion de facturation et/ou de politiques (5).

7. Noeud de gestion de facturation et/ou de politiques selon la revendication 5 ou 6,
**caractérisé en ce que**
le moyen de commande de mise en correspondance (51) est apte à accepter ou non une mise en correspondance, et à fournir un renouvellement de mise en correspondance pour des mises en correspondance non acceptées, ou à négocier une mise en correspondance.

8. Noeud de gestion de facturation et/ou de politiques selon l'une quelconque des revendications 5 à 7,
**caractérisé en ce que**
des modèles de flux de trafic sont utilisés en vue de fournir des informations de mise en correspondance pour une communication en liaison montante et en liaison descendante.

9. Noeud de gestion de facturation et/ou de politiques (5) selon l'une quelconque des revendications 5 à 8,
**caractérisé en ce que**
il comprend une fonction de règles de facturation (5), une fonction de décision de politiques ou un noeud de commande de politiques et de facturation.

10. Noeud de support de données en paquets (4 ; 4') dans un système de communication prenant en charge une communication de données en paquets, en outre agencé de manière à être en communication avec un noeud de gestion de facturation et/ou de politiques (5) et des stations d'utilisateur mobiles (1), dans lequel, pour une station d'utilisateur mobile, UE, accédant / demandant accès à des services fournis par une fonction d'application, AF, d'un réseau de données en paquets externe, une session d'utilisateur connexe à un service, auquel l'accès est demandé par l'équipement UE, est établie en utilisant un protocole de signalisation d'applications incluant le provisionnement d'une description de services, ladite description de services répertoriant quelle qualité QoS et quelles autres caractéristiques de transmission sont requises pour ledit service demandé, d'une fonction AF (6, 6₁) gérant une gestion de la mobilité et une commande d'appels de stations d'utilisateur mobiles (1 ; 1') demandant / accédant à un service, à un noeud de gestion de facturation et/ou de politiques ;
**caractérisé en ce que**
il comprend un second moyen de mise en correspondance étendu (43), au moins pour une mise en correspondance en liaison montante, apte à recevoir, à partir d'un équipement UE, une demande de réservation de ressources avec des règles de mise en correspondance, comprenant des informations de mise en correspondance concernant des ressources de transmission devant être utilisées sur la liaison montante pour une session d'utilisateur donnée d'un service demandé sur la base d'une description de services mettant en correspondance le service demandé sur un ou plusieurs contextes PDP, et à fournir lesdites règles de mise en correspondance générées par l'équipement UE dans une demande d'autorisation au noeud de gestion de facturation et/ou de politiques, et à recevoir une réponse à ladite demande d'autorisation, à partir du noeud de gestion de facturation et/ou de politiques, comprenant des informations sur une mise en correspondance d'orientation, et à acheminer lesdites informations sur une mise en correspondance de trafic d'orientation vers ledit équipement UE, dans une réponse à ladite demande de réservation de ressources.

11. Noeud de support de données en paquets (4 ; 4') selon la revendication 10,
**caractérisé en ce que**
le second moyen de mise en correspondance étendu (43) comporte également des informations de mise en correspondance sur des ressources de transmission, des contextes PDP, devant être utilisés sur la liaison descendante pour une session d'utilisateur donnée du service.

12. Noeud de support de données en paquets (4 ; 4') selon la revendication 10 ou 11,
**caractérisé en ce que**
le second moyen de mise en correspondance étendu (43) comporte un moyen de filtrage, et est apte à fournir une fonction de filtrage de paquets autorisés / non autorisés à utiliser des ressources de transmission spécifiques, et **en ce qu'**il (43) est apte à écarter des paquets entrants en provenance des équipements UE, lesquels ne sont pas confirmés dans les filtres donnés par les informations de mise en correspondance.

13. Noeud de support de données en paquets (4 ; 4') selon l'une quelconque des revendications 10 à 12,
**caractérisé en ce que**
le second moyen de mise en correspondance étendu (43) est apte à recevoir des informations de filtrage, si un établissement de mise en correspondance est modifié, à partir d'un noeud de gestion de facturation et/ou de politiques (5) et à installer lesdites informations de filtrage de sorte qu'elles peuvent être appliquées sur des paquets entrants.

14. Noeud de support de données en paquets (4 ; 4') selon l'une quelconque des revendications 10 à 13,
**caractérisé en ce que**
le second moyen de mise en correspondance étendu (43) est apte à recevoir et à traiter un message de déclaration en provenance d'un équipement UE (1), contenant des informations indiquant si une mise en correspondance de ressources de liaison montante est prise en charge, à inclure des informations connexes dans un message d'autorisation de demande à un noeud de gestion de facturation et/ou de politiques (5) et à inclure de telles informations de mise en correspondance en liaison montante dans une communication avec le noeud de gestion de facturation et/ou de politiques (5) et avec l'équipement UE (1) lors de l'activation d'une procédure de contexte PDP secondaire pour un accès aux services.

15. Noeud de support de données en paquets (4 ; 4') selon l'une quelconque des revendications 10 à 14,
**caractérisé en ce que**
il comprend un noeud GGSN ou un noeud CGSN.

16. Noeud de support de données en paquets (4 ; 4') selon l'une quelconque des revendications 10 à 15,
**caractérisé en ce que**
il comprend une fonctionnalité de noeud GGSN ou une fonctionnalité de noeud CGSN et **en ce qu'**il comprend en outre la fonctionnalité d'un noeud de gestion de facturation et/ou de politiques (5) selon l'une quelconque des revendications 5 à 9.

17. Système destiné à fournir une commande d'utilisation de ressources de transmission en liaison montante dans un système de communication prenant en charge une communication de données en paquets, comprenant un nombre de noeuds de support de données en paquets (4, 3), un nombre de noeuds de gestion de facturation et/ou de politiques (5), un nombre de fonctions d'application, AF, (6, 6₁) gérant une gestion de la mobilité et une commande d'appels de stations d'utilisateur mobiles (1 ; 1') demandant / accédant à un service fourni par un réseau IP externe, dans lequel, pour une station d'utilisateur mobile, UE, accédant / demandant accès à des services fournis par une fonction AF d'un réseau de données en paquets externe, il est apte à établir une session d'utilisateur connexe à un service, lequel accès est demandé par l'équipement UE en utilisant un protocole de signalisation d'applications, et dans lequel une fonction AF (6, 6₁), gérant un équipement UE demandant / accédant à un service, est apte à envoyer une description de services à l'équipement UE et à un noeud de gestion de facturation et/ou de politiques ;
**caractérisé en ce que**
le système inclut une station d'utilisateur mobile, UE, selon la revendication 3, un noeud de gestion de facturation et/ou de politiques selon la revendication 5 et un noeud de support de données en paquets selon la revendication 10.

18. Système selon la revendication 17,
**caractérisé en ce que**
les informations de mise en correspondance comportent également des informations sur une mise en correspondance de ressources de transmission, un ou des contextes PDP, et le service pour une communication en liaison descendante.

19. Système selon la revendication 17 ou 18,
**caractérisé en ce que**
l'équipement UE est apte à envoyer un message d'indication de mise en correspondance comprenant une indication selon laquelle la fonctionnalité d'établissement de ressources de transmission en liaison montante est prise en charge.

20. Système selon la revendication 17, 18 ou 19,
**caractérisé en ce que**
l'équipement UE est apte à envoyer un message d'indication de mise en correspondance comprenant une indication selon laquelle une instruction de mise en correspondance en liaison montante, en vue d'une mise en correspondance de ressources de transmission, de contextes PDP, et de services, est demandée à partir du noeud de gestion de facturation et/ou de politiques connexe à une mise en correspondance au moins sur la liaison montante.

21. Système selon l'une quelconque des revendications 17 à 20,
**caractérisé en ce que**
le noeud de support de données en paquets comprend un noeud GGSN ou un noeud CGSN.

22. Système au moins selon la revendication 21,
**caractérisé en ce que**
le premier moyen de mise en correspondance étendu (13) est apte à mettre en correspondance des informations connexes aux services d'un protocole de description de session sur un nombre de qualités QoS et de modèles TFT de contextes PDP.

23. Système selon l'une quelconque des revendications précédentes,
**caractérisé en ce que**
le moyen de commande (51) de noeud de gestion de facturation et/ou de politiques (5) est apte à mettre en oeuvre un renouvellement de mise en correspondance d'une mise en correspondance de « contextes PDP à services » rejetée, et à envoyer des informations sur le renouvellement de mise en correspondance à l'équipement UE.

24. Système selon l'une quelconque des revendications précédentes,
**caractérisé en ce que**
un service demandé comprend un service multimédia Internet.

25. Agencement de système selon la revendication 24,
**caractérisé en ce que**
tous les paquets d'une session de service sont mis en correspondance sur un contexte PDP pour une communication en liaison montante, ou **en ce que** deux contextes PDP distincts ou plus sont utilisés pour différentes qualités QoS demandées d'une seule et même session de service demandé pour une communication en liaison montante.

26. Système selon l'une quelconque des revendications précédentes,
**caractérisé en ce que**
l'équipement UE (1) est apte à, en utilisant des informations de session de service reçues en provenance de l'équipement AF (6), envoyer une demande d'activation de contexte PDP secondaire contenant des informations de mise en correspondance connexes à une communication en liaison montante ou à une communication en liaison montante et en liaison descendante.

27. Système selon la revendication 26,
**caractérisé en ce que**
les informations de mise en correspondance comportent un ou plusieurs modèles TFT et/ou modèles TFT modifiés connexes à des informations de mise en correspondance de trafic en liaison montante ou à des informations de mise en correspondance de trafic en liaison montante et en liaison descendante, respectivement.

28. Système selon la revendication 26 ou 27,
**caractérisé en ce que**
le noeud de support de données en paquets (4 ; 4') est apte à demander une autorisation pour un service demandé et pour la mise en correspondance de trafic en liaison montante et en liaison descendante incluse dans une demande de création de contexte PDP secondaire, auprès du noeud de gestion de facturation et/ou de politiques.

29. Système selon la revendication 28,
**caractérisé en ce que**
le moyen de commande de noeud de gestion de facturation et/ou de politiques (51) est apte à accepter ou à rejeter, ou à modifier directement ou indirectement, la mise en correspondance en liaison montante selon les informations de mise en correspondance en liaison montante ajoutées à la demande de contexte PDP secondaire.
